# EUROPEAN PATENT APPLICATION

(11) **EP 4 012 345 A1**
(43) Date of publication of application: **15.06.2022**
(21) Application number: 19914209.2
(22) Date of filing: 09.08.2019
(51) Int. Cl.: G01C 21/36, G06F 8/65, G01C 21/34, G08G 1/0969, B60W 30/10, H04W 4/024

(54) **ROUTE PROVIDING APPARATUS AND ROUTE PROVIDING METHOD THEREOF**

(71) Applicant: LG Electronics Inc., Seoul 07336 (KR)
(72) Inventor: KIM, Jihyun, Seoul 06772 (KR); CHOI, Jaeho, Seoul 06772 (KR)
(74) Representative: Mooser, Sebastian Thomas
(86) International application number: PCT/KR2019/010064
(87) International publication number: WO 2021/029445

(57) **Abstract**

The present disclosure provides a path providing device for providing a path (route) to a vehicle, and a path providing method thereof. The path providing device includes an image sensor, and the image sensor and a processor are provided on one printed circuit board. The path providing device further includes a data fusion unit configured to extract a portion that needs to be updated from the map information using an image received from the image sensor.

## Description

### CROSS-REFERENCE TO RELATED APPLICATIONS

This application is the National Stage filing under 35 U.S.C. 371 of International Application No. PCT/KR2019/010064 filed on August 09, 2019, which is hereby expressly incorporated by reference into the present application.

### TECHNICAL FIELD

The present disclosure relates to a path providing device for providing a path (route) to a vehicle and a path providing method thereof.

### BACKGROUND ART

A vehicle refers to means of transporting people or goods by using kinetic energy. Representative examples of vehicles include automobiles and motorcycles.

For safety and convenience of a user who uses the vehicle, various sensors and devices are provided in the vehicle, and functions of the vehicle are diversified.

The functions of the vehicle may be divided into a convenience function for promoting driver's convenience, and a safety function for enhancing safety of the driver and/or pedestrians.

First, the convenience function has a development motive associated with the driver's convenience, such as providing infotainment (information + entertainment) to the vehicle, supporting a partially autonomous driving function, or helping the driver ensuring a field of vision at night or at a blind spot. For example, the convenience functions may include various functions, such as an active cruise control (ACC), a smart parking assist system (SPAS), a night vision (NV), a head up display (HUD), an around view monitor (AVM), an adaptive headlight system (AHS), and the like.

The safety function is a technique of ensuring safeties of the driver and/or pedestrians, and may include various functions, such as a lane departure warning system (LDWS), a lane keeping assist system (LKAS), an autonomous emergency braking (AEB), and the like.

For convenience of a user using a vehicle, various types of sensors and electronic devices are provided in the vehicle. Specifically, a study on an Advanced Driver Assistance System (ADAS) is actively undergoing. In addition, an autonomous vehicle is actively under development.

As the development of the advanced driver assistance system (ADAS) is actively undergoing in recent time, development of a technology for optimizing user's convenience and safety while driving a vehicle is required.

As part of this effort, in order to effectively transmit electronic Horizon (eHorizon) data to autonomous driving systems and infotainment systems, the European Union Original Equipment Manufacturing (EU OEM) Association has established a data specification and transmission method as a standard under the name "Advanced Driver Assistance Systems Interface Specification (ADASIS)."

In addition, eHorizon (software) is becoming an integral part of safety/ECO/convenience of autonomous vehicles in a connected environment.

### DETAILED DESCRIPTION OF THE DISCLOSURE

### TECHNICAL PROBLEM

The present disclosure is directed to solving the aforementioned problems and other drawbacks.

One aspect of the present disclosure is to provide a path providing device and a path providing method thereof capable of providing autonomous driving visibility (or visual field) information that enables autonomous driving.

Another aspect of the present disclosure is to provide a path providing device having an image sensor for generating or updating autonomous driving visibility information in an optimized manner, and a path providing method thereof.

### TECHNICAL SOLUTION

The present disclosure provides a path providing device for providing a path (route) to a vehicle, and a path providing method thereof.

A path providing device in accordance with one embodiment of the present disclosure may include an image sensor, an interface unit configured to receive sensing information from one or more sensors provided in the vehicle, and a processor configured to specify one lane in which the vehicle is located on a road with a plurality of lanes based on an image, received from the image sensor, among the sensing information, to estimate an optimal path, on which the vehicle is expected or planned to move based on the specified one lane, in lane units using map information received through a communication module provided in the vehicle, to generate autonomous driving visibility information by fusing the sensing information with the optimal path to transmit to at least one of the server and an electric component provided in the vehicle, and to update the optimal path based on dynamic information for guiding a movable object located on the optimal path, the dynamic information being fused with the autonomous driving visibility information. The processor and the image sensor may be provided on one printed circuit board.

In one embodiment, the interface unit may be connected in a wired manner to the communication module provided in the vehicle.

In one embodiment, the communication module may transmit data processed in the processor to at least one of electric components and sensors provided in the vehicle and the server through wired or wireless communication.

In one embodiment, the device may further include a communication unit configured to receive map information including a plurality of layers from the server, and the communication unit, the image sensor and the processor may be provided on the one printed circuit board.

In one embodiment, the device may further include a data fusion unit configured to receive map information, to which an optimal path generated in the processor has been applied, and an image sensed by the image sensor, and the data fusion unit, the processor, and the image sensor may be provided on the one printed circuit board.

In one embodiment, the processor may transmit a message including pieces of information excluding information determined by the image sensor to the communication module, and transmit map information with the optimal path applied thereto to the data fusion unit.

In one embodiment, the data fusion unit may perform communication with the communication module provided in the vehicle.

In one embodiment, the device may further include a communication unit configured to receive map information including a plurality of layers from the server, and the image sensor, the processor, the data fusion unit, and the communication unit may be provided on the one printed circuit board.

In one embodiment, the device may further include a data fusion unit configured to extract a portion that needs to be updated from the map information using the image received from the image sensor.

In one embodiment, the data fusion unit may transmit difference information related to the portion that needs to be updated to the processor, and the processor may generate the optimal path based on the difference information.

In one embodiment, the data fusion unit may extract a portion that needs to be updated from the map information according to a current location of the vehicle and a time at which the image has been received, and transmit difference information related to the extracted portion that needs to be updated to the server in association with the current location of the vehicle and the time.

In one embodiment, the data fusion unit may transmit difference information related to a portion that needs to be updated to the processor, and the processor may generate an optimal path using the difference information in a path section including the difference information, and generate an optimal path using the map information in a path section not including the difference information.

In one embodiment, the data fusion unit may receive map information from the server through the communication module, receive an image from the image sensor, compare the map information with object information included in the image, extract information that needs to be corrected from the map information, and transmit the extracted information to the server through the communication module.

In one embodiment, the processor may determine external environment information using at least one of the sensors, and the data fusion unit may differently set a method of extracting a portion that needs to be updated based on the determined external environment information.

In one embodiment, the data fusion unit may differently set at least one of an extraction range for extracting the portion that needs to be updated and a type of information to be extracted, based on whether the external environment information satisfies a preset condition.

In one embodiment, the processor may transmit the autonomous driving visibility information to the communication module so that the autonomous driving visibility information can be transmitted to an electric component provided in the vehicle.

In one embodiment, the processor may transmit partial information of the autonomous driving visibility information for each electric component provided in the vehicle.

In one embodiment, the processor may not transmit lane information that is used in the image sensor, among the autonomous driving visibility information.

In one embodiment, the processor may transmit autonomous driving visibility information, from which lane information used by the image sensor has been excluded, to an electric component provided in the vehicle, and the image sensor may transmit lane information extracted from the image to the electric component provided in the vehicle.

### ADVANTAGEOUS EFFECTS

Hereinafter, effects of a path providing device and a path providing method thereof according to the present disclosure will be described.

First, the present disclosure can provide a path providing device that is optimized for generating or updating autonomous driving visibility information.

Second, the present disclosure can provide a path providing device including an image sensor, which may allow image data to be used more quickly without a communication process between the path providing device and a separate camera, thereby improving processing speed.

Third, the present disclosure can provide a path providing device having an image sensor. Accordingly, a processor of the path providing device does not have to perform a process to be performed by the image sensor. This may result in reducing computational overload.

### BRIEF DESCRIPTION OF THE DRAWINGS

FIG. 1 is a view illustrating an appearance of a vehicle according to an embodiment of the present disclosure.
FIG. 2 is a view in which a vehicle according to an embodiment of the present disclosure is viewed at various angles from the outside.
FIGS. 3 and 4 are views illustrating an inside of a vehicle according to an embodiment of the present disclosure.
FIGS. 5 and 6 are views referenced to describe objects according to an embodiment of the present disclosure.
FIG. 7 is a block diagram referenced to describe a vehicle according to an embodiment of the present disclosure.
FIG. 8 is a conceptual view for explaining an electronic horizon provider (EHP) associated with the present disclosure.
FIG. 9 is a block diagram for explaining the path providing device of FIG. 8 in more detail.
FIG. 10 is a conceptual view for explaining eHorizon associated with the present disclosure.
FIGS. 11A and 11B are conceptual views for explaining a local dynamic map (LDM) and an advanced driver assistance system (ADAS) MAP associated with the present disclosure.
FIGS. 12A and 12B are exemplary views for explaining a method of receiving high-definition map data by a path providing device according to an embodiment of the present disclosure.
FIG. 13 is a flowchart illustrating an example of generating autonomous driving visibility information by receiving high-definition map by the path providing device.
FIGS. 14, 15, 16, and 17 are conceptual views illustrating various embodiments in which an image sensor is included in a path providing device according to the present disclosure.
FIGS. 18, 19, and 20 are flowcharts illustrating a method of controlling a path providing device including an image sensor according to the present disclosure.

### MODES FOR CARRYING OUT PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an embodiment of the present disclosure may be understood as a conception including cars, motorcycles and the like. Hereinafter, the vehicle will be described based on a car.

The vehicle according to the embodiment of the present disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

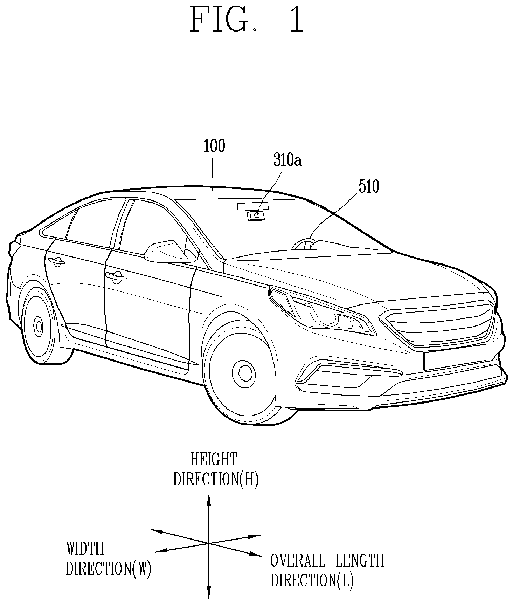

FIG. 1 is a diagram illustrating appearance of a vehicle in accordance with an implementation of the present disclosure.

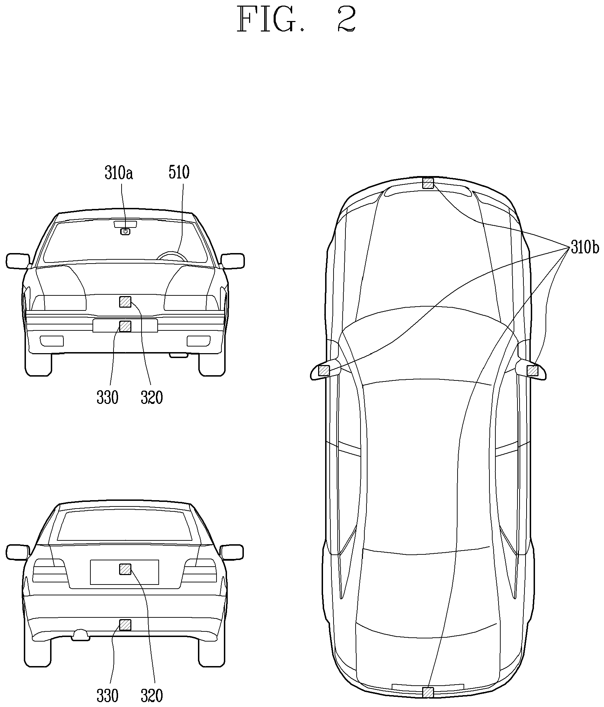

FIG. 2 is a diagram illustrating appearance of a vehicle at various angles in accordance with an implementation of the present disclosure.

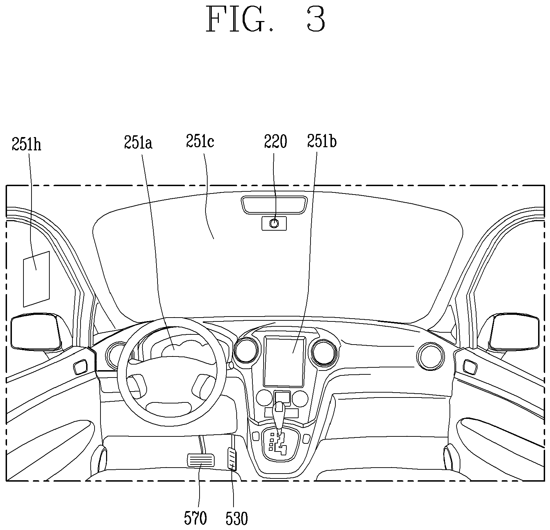

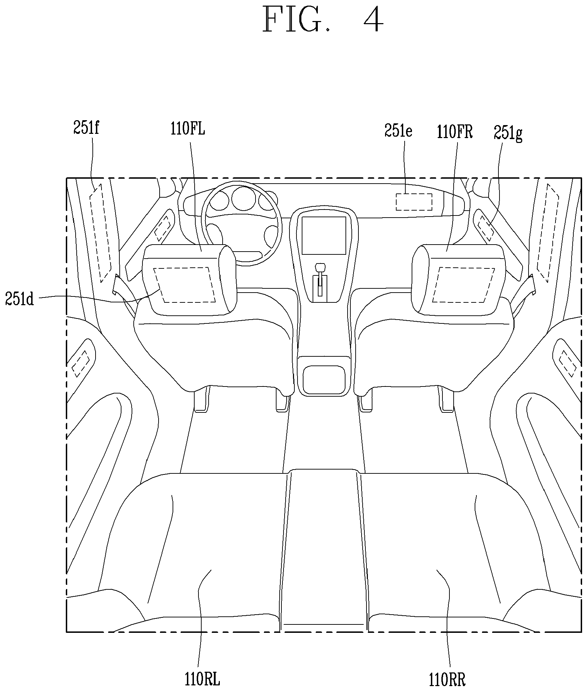

FIGS. 3 and 4 are views illustrating an inside of a vehicle in accordance with an embodiment of the present disclosure.

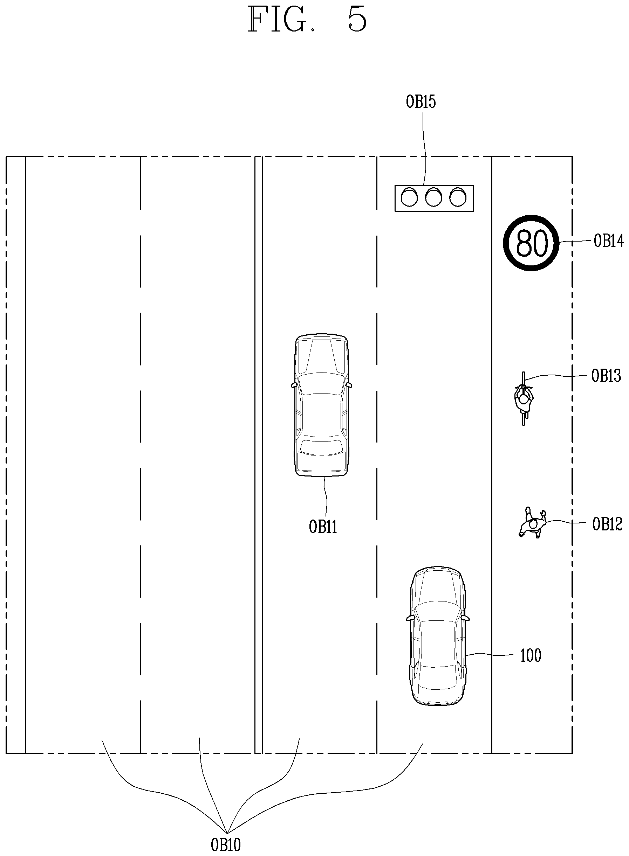

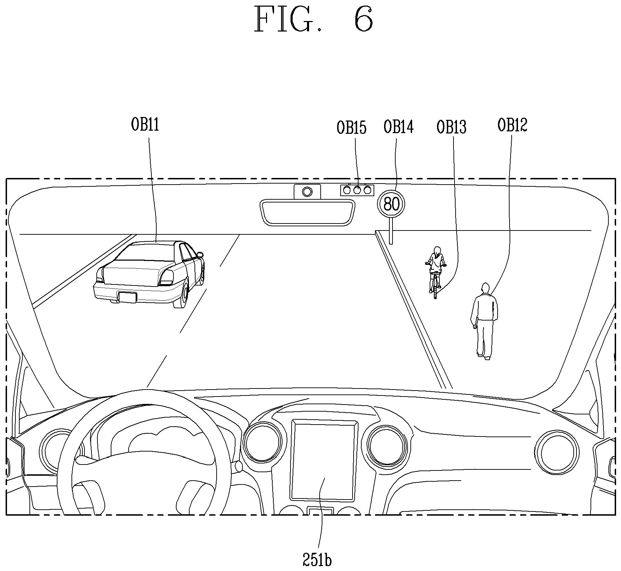

FIGS. 5 and 6 are views referenced to describe objects according to an embodiment of the present disclosure.

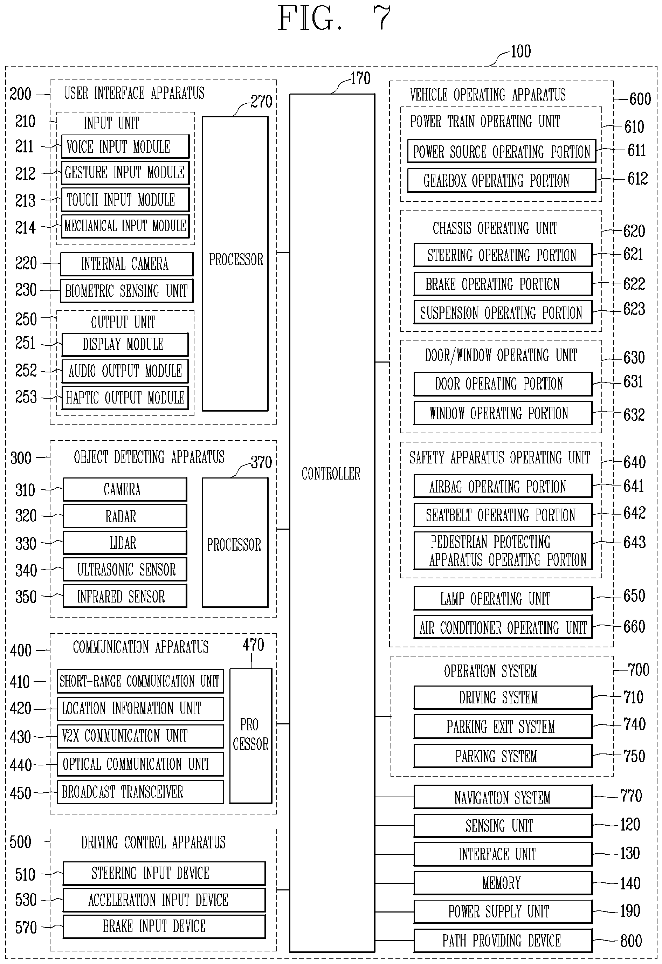

FIG. 7 is a block diagram referenced to describe a vehicle according to an embodiment of the present disclosure.

As illustrated in FIGS. 1 to 7, a vehicle 100 may include wheels turning by a driving force, and a steering input device 510 to adjust a driving (ongoing, moving) direction of the vehicle 100.

The vehicle 100 may be an autonomous vehicle.

The vehicle 100 may be switched into an autonomous driving mode or a manual mode based on a user input.

For example, the vehicle 100 may be switched from the manual mode to the autonomous driving mode or from the autonomous driving mode to the manual mode based on a user input received through a user interface device 200.

The vehicle 100 may be switched to the autonomous driving mode or the manual mode based on driving environment information. The driving environment information may be generated based on object information provided from an object detecting device 300.

For example, the vehicle 100 may be switched from the manual mode into the autonomous mode or from the autonomous module into the manual mode based on driving environment information generated in the object detecting apparatus 300.

In an example, the vehicle 100 may be switched from the manual mode to the autonomous driving mode or from the autonomous driving mode to the manual mode based on driving environment information received through a communication device 400.

The vehicle 100 may be switched from the manual mode to the autonomous driving mode or from the autonomous driving mode to the manual mode based on information, data or signal provided from an external device.

When the vehicle 100 is driven in the autonomous driving mode, the autonomous vehicle 100 may be driven based on an operation system 700.

For example, the autonomous vehicle 100 may be driven based on information, data or signal generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control device 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100.

As illustrated in FIG. 7, the vehicle 100 may include a user interface device 200, an object detecting device 300, a communication device 400, a driving control device 500, a vehicle operating device 600, am operation system 700, a navigation system 770, a sensing unit 120, an interface unit 130, a memory 140, a controller 170 and a power supply unit 190.

According to embodiments, the vehicle 100 may include more components in addition to components to be explained in this specification or may not include some of those components to be explained in this specification.

The user interface device 200 is a device for communication between the vehicle 100 and a user. The user interface device 200 may receive a user input and provide information generated in the vehicle 100 to the user. The vehicle 200 may implement user interfaces (Uls) or user experiences (UXs) through the user interface device 200.

The user interface device 200 may include an input unit 210, an internal camera 220, a biometric sensing unit 230, an output unit 250 and a processor 270.

According to embodiments, the user interface device 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 200 may be disposed inside the vehicle. For example, the input unit 200 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 200 may include an audio input unit 211, a gesture input unit 212, a touch input unit 213, and a mechanical input unit 214.

The voice input unit 211 may convert a user's voice input into an electric signal. The converted electric signal may be provided to the processor 270 or the controller 170.

The voice input unit 211 may include at least one microphone.

The gesture input unit 212 may convert a user's gesture input into an electric signal. The converted electric signal may be provided to the processor 270 or the controller 170.

The gesture input unit 212 may include at least one of an infrared sensor and an image sensor to detect the user's gesture input.

According to embodiments, the gesture input unit 212 may detect a user's three-dimensional (3D) gesture input. To this end, the gesture input unit 212 may include a light emitting diode outputting a plurality of infrared rays or a plurality of image sensors.

The gesture input unit 212 may detect the user's 3D gesture input by a time of flight (TOF) method, a structured light method or a disparity method.

The touch input unit 213 may convert the user's touch input into an electric signal. The converted electric signal may be provided to the processor 270 or the controller 170.

The touch input unit 213 may include a touch sensor to detect the user's touch input.

According to an embodiment, the touch input unit 213 may be integrated with the display 251 so as to implement a touch screen. The touch screen may provide an input interface and an output interface between the vehicle 100 and the user.

The mechanical input unit 214 may include at least one of a button, a dome switch, a jog wheel and a jog switch. An electric signal generated by the mechanical input unit 214 may be provided to the processor 270 or the controller 170.

The mechanical input unit 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing unit 230 may include a sensor to detect the user's biometric information and acquire fingerprint information and heart rate information regarding the user using the sensor. The biometric information may be used for user authentication.

The output unit 250 may generate an output related to a visual, audible or tactile signal.

The output unit 250 may include at least one of a display 251, an audio output unit 252 and a haptic output unit 253.

The display 251 may output graphic objects corresponding to various types of information.

The display 251 may include at least one of a liquid crystal display (LCD), a thin film transistor-LCD (TFT LCD), an organic light-emitting diode (OLED), a flexible display, a three-dimensional (3D) display and an e-ink display.

The display 251 may be inter-layered or integrated with a touch input unit 213 to implement a touch screen.

The display 251 may be implemented as a head up display (HUD). When the display 251 is implemented as the HUD, the display 251 may be provided with a projecting module so as to output information through an image which is projected on a windshield or a window.

The display 251 may include a transparent display. The transparent display may be attached to the windshield or the window.

The transparent display may have a predetermined degree of transparency and output a predetermined screen thereon. The transparent display may include at least one of a thin film electroluminescent (TFEL), a transparent OLED, a transparent LCD, a transmissive transparent display and a transparent LED display. The transparent display may have adjustable transparency.

Meanwhile, the user interface device 200 may include a plurality of displays 251a to 251g.

The display 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output unit 252 converts an electric signal provided from the processor 270 or the controller 170 into an audio signal for output. To this end, the audio output unit 252 may include at least one speaker.

The haptic output unit 253 generates a tactile output. For example, the haptic output unit 253 may vibrate the steering wheel, a safety belt, a seat 110FL, 110FR, 110RL, 110RR such that the user can recognize such output.

The processor 270 may control an overall operation of each unit of the user interface device 200.

According to an embodiment, the user interface device 200 may include a plurality of processors 270 or may not include any processor 270.

When the processor 270 is not included in the user interface device 200, the user interface device 200 may operate according to a control of a processor of another device within the vehicle 100 or the controller 170.

Meanwhile, the user interface device 200 may be referred to as a display device for vehicle.

The user interface device 200 may operate according to the control of the controller 170.

The object detecting device 300 is a device to detect an object located at outside of the vehicle 100.

The object may be a variety of objects associated with driving (operation) of the vehicle 100.

Referring to FIGS. 5 and 6, an object O may include a traffic lane

OB10, another vehicle OB11, a pedestrian OB12, a two-wheeled vehicle OB13, traffic signals OB14 and OB15, light, a road, a structure, a speed hump, a terrain, an animal and the like.

The lane OB01 may be a driving lane, a lane next to the driving lane or a lane on which another vehicle comes in an opposite direction to the vehicle 100. The lanes OB10 may be a concept including left and right lines forming a lane.

The another vehicle OB11 may be a vehicle which is moving near the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a vehicle (transportation facility) that is located near the vehicle 100 and moves using two wheels. The two-wheeled vehicle OB12 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The terrain may include a mountain, a hill and the like.

Meanwhile, objects may be classified into a moving object and a fixed object. For example, the moving object may be a concept including another vehicle and a pedestrian. The fixed object may be a concept including a traffic signal, a road and a structure, for example.

The object detecting device 300 may include a camera 310, a radar 320, a LiDAR 330, an ultrasonic sensor 340, an infrared sensor 350 and a processor 370.

According to an embodiment, the object detecting device 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an around view monitoring (AVM) camera 310b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift Keyong (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle to detect an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle to detect an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle to detect an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle to detect an object located at the front, rear or side of the vehicle.

The processor 370 may control an overall operation of each unit of the object detecting device 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor may detect an object based on reflected infrared light which emitted infrared light is reflected from the object, and track the object. The processor 370 may execute operations, such as a calculation of a distance from the object, a calculation of a relative speed with the object and the like, based on the infrared light.

According to an embodiment, the object detecting device 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detecting device 300, the object detecting device 300 may operate according to the control of a processor of a device within the vehicle 100 or the controller 170.

The object detecting apparatus 400 may operate according to the control of the controller 170.

The communication device 400 is a device to perform communication with an external device. Here, the external device may be another vehicle, a mobile terminal or a server.

The communication device 400 may perform the communication by including at least one of a transmitting antenna, a receiving antenna, and radio frequency (RF) circuit and RF device to implement various communication protocols.

The communication device 400 may include a short-range communication unit 410, a location information unit 420, a V2X communication unit 430, an optical communication unit 440, a broadcast transceiver 450 and a processor 470.

According to an embodiment, the communication device 400 may further include other components in addition to the components described, or may not include some of the components described.

The short-range communication unit 410 is a unit to facilitate short-range communications. Suitable technologies to implement such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit to acquire location information. For example, the location information unit 420 may include a Global Positioning System (GPS) module or a Differential Global Positioning System (DGPS) module.

The V2X communication unit 430 is a unit to perform wireless communications with a server (Vehicle to Infra: V2I), another vehicle (Vehicle to Vehicle: V2V), or a pedestrian (Vehicle to Pedestrian: V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit to perform communication with an external device through the medium of light. The optical communication unit 440 may include a light-emitting diode to convert an electric signal into an optical signal and send the optical signal to the exterior, and a photodiode to convert the received optical signal into an electric signal.

According to an embodiment, the light-emitting diode may be integrated with lamps provided on the vehicle 100.

The broadcast transceiver 450 is a unit to receive a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal and a data broadcast signal.

The processor 470 may control an overall operation of each unit of the communication device 400.

According to an embodiment, the communication device 400 may include a plurality of processors 470 or may not include any processor 470.

When the processor 470 is not included in the communication device 400, the communication device 400 may operate according to the control of a processor of another device within the vehicle 100 or the controller 170.

Meanwhile, the communication device 400 may implement a display device for a vehicle together with the user interface device 200. In this instance, the display device for the vehicle may be referred to as a telematics device or an audio video navigation (AVN) device.

The communication device 400 may operate according to the control of the controller 170.

The driving control device 500 is a device to receive a user input for driving.

In the manual mode, the vehicle 100 may be operated based on a signal provided by the driving control device 500.

The driving control device 500 may include a steering input device 510, an acceleration input device 530, and a brake input device 570.

The steering input device 510 may receive an input regarding a driving (ongoing) direction of the vehicle 100 from the user. The steering input device 510 is preferably configured in the form of a wheel allowing a steering input in a rotating manner. According to some embodiments, the steering input device may also be configured in a shape of a touch screen, a touch pad or a button.

The acceleration input device 530 may receive an input to accelerate the vehicle 100 from the user. The brake input device 570 may receive an input to brake the vehicle 100 from the user. Each of the acceleration input device 530 and the brake input device 570 is preferably configured in the form of a pedal. According to some embodiments, the acceleration input device or the brake input device may also be configured in a shape of a touch screen, a touch pad or a button.

The driving control device 500 may operate according to the control of the controller 170.

The vehicle operating device 600 is a device to electrically control operations of various devices within the vehicle 100.

The vehicle operating device 600 may include a power train operating portion 610, a chassis operating portion 620, a door/window operating portion 630, a safety apparatus operating portion 640, a lamp operating portion 650, and an air-conditioner operating portion 660.

According to some embodiments, the vehicle operating device 600 may further include other components in addition to the components described, or may not include some of the components described.

Meanwhile, the vehicle operating device 600 may include a processor. Each unit of the vehicle operating device 600 may individually include a processor.

The power train operating portion 610 may control an operation of a power train device.

The power train operating portion 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox.

The gearbox operating portion 612 may adjust a state of the gearbox. The gearbox operating portion 612 may change the state of the gearbox into drive (forward) (D), reverse (R), neutral (N) or parking (P).

Meanwhile, when an engine is the power source, the gearbox operating portion 612 may adjust a locked state of a gear in the drive (D) state.

The chassis operating portion 620 may control an operation of a chassis device.

The chassis operating portion 620 may include a steering operating portion 621, a brake operating portion 622, and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road.

Meanwhile, the suspension operating portion 623 may individually control each of a plurality of suspensions.

The door/window operating portion 630 may perform an electronic control for a door apparatus or a window apparatus within the vehicle 100.

The door/window operating portion 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating portion 640 may perform an electronic control for various safety apparatus within the vehicle 100.

The safety apparatus operating portion 640 may include an airbag operating portion 641, a seatbelt operating portion 642 and a pedestrian protecting device operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting device operating portion 643 may perform an electronic control for a hood lift and a pedestrian airbag. For example, the pedestrian protecting device operating portion 643 may control the hood lift and the pedestrian airbag to be open up upon detecting pedestrian collision.

The lamp operating portion 650 may perform an electronic control for various lamp apparatus within the vehicle 100.

The air-conditioner operating portion 660 may perform an electronic control for an air conditioner within the vehicle 100. For example, the air-conditioner operating portion 660 may control the air conditioner to supply cold air into the vehicle when internal temperature of the vehicle is high.

The vehicle operating device 600 may include a processor. Each unit of the vehicle operating device 600 may individually include a processor.

The vehicle operating device 600 may operate according to the control of the controller 170.

The operation system 700 is a system that controls various driving modes of the vehicle 100. The operation system 700 may operate in an autonomous driving mode.

The operation system 700 may include a driving system 710, a parking exit system 740 and a parking system 750.

According to embodiments, the operation system 700 may further include other components in addition to components to be described, or may not include some of the components to be described.

Meanwhile, the operation system 700 may include a processor. Each unit of the operation system 700 may individually include at least one processor.

According to embodiments, the operation system 700 may be implemented by the controller 170 when it is implemented in a software configuration.

Meanwhile, according to embodiments, the operation system 700 may be implemented by at least one of the user interface device 200, the object detecting device 300, the communication device 400, the vehicle operating device 600 and the controller 170.

The driving system 710 may perform driving of the vehicle 100.

The driving system 710 may receive navigation information from a navigation system 770, transmit a control signal to the vehicle operating device 600, and perform driving of the vehicle 100.

The driving system 710 may receive object information from the object detecting device 300, transmit a control signal to the vehicle operating device 600 and perform driving of the vehicle 100.

The driving system 710 may receive a signal from an external device through the communication device 400, transmit a control signal to the vehicle operating device 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating device 600, and perform the exit of the vehicle 100 from the parking lot.

The parking exit system 740 may receive object information from the object detecting device 300, transmit a control signal to the vehicle operating device 600 and perform the exit of the vehicle 100 from the parking lot.

The parking exit system 740 may receive a signal from an external device through the communication device 400, transmit a control signal to the vehicle operating device 600, and perform the exit of the vehicle 100 from the parking lot.

The parking system 750 may perform parking of the vehicle 100.

The parking system 750 may receive navigation information from the navigation system 770, transmit a control signal to the vehicle operating device 600, and park the vehicle 100.

The parking system 750 may receive object information from the object detecting device 300, transmit a control signal to the vehicle operating device 600 and park the vehicle 100.

The parking system 750 may receive a signal from an external device through the communication device 400, transmit a control signal to the vehicle operating device 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update pre-stored information by receiving information from an external device through the communication device 400.

According to embodiments, the navigation system 770 may be classified as a sub component of the user interface device 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The vehicle interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the vehicle interface unit 130 may exchange data with the mobile terminal.

Meanwhile, the interface unit 130 may serve as a path to supply electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data to control operations of units and input/output data. The memory 140 may be a variety of storage devices, such as ROM, RAM, EPROM, a flash drive, a hard drive and the like in a hardware configuration. The memory 140 may store various data for overall operations of the vehicle 100, such as programs to process or control the controller 170.

According to embodiments, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Meanwhile, the vehicle 100 according to the present disclosure may include a path providing device 800.

The path providing device 800 may control at least one of those components illustrated in FIG. 7. From this perspective, the path providing device 800 may be the controller 170.

Without a limit to this, the path providing device 800 may be a separate device, independent of the controller 170. When the path providing device 800 is implemented as a component independent of the controller 170, the path providing device 800 may be provided on a part of the vehicle 100.

Hereinafter, description will be given of embodiments in which the path providing device 800 is a component which is separate from the controller 170, for the sake of explanation. As such, according to embodiments described in this disclosure, the functions (operations) and control techniques described in relation to the path providing device 800 may be executed by the controller 170 of the vehicle. However, in general, the path providing device 800 may be implemented by one or more other components in various ways.

Also, the path providing device 800 described herein may include some of the components illustrated in FIG. 7 and various components included in the vehicle. For the sake of explanation, the components illustrated in FIG. 7 and the various components included in the vehicle will be described with separate names and reference numbers.

Hereinafter, description will be given in more detail of a method of autonomously traveling a vehicle related to the present disclosure in an optimized manner or providing path information optimized for the travel of the vehicle, with reference to the accompanying drawings.

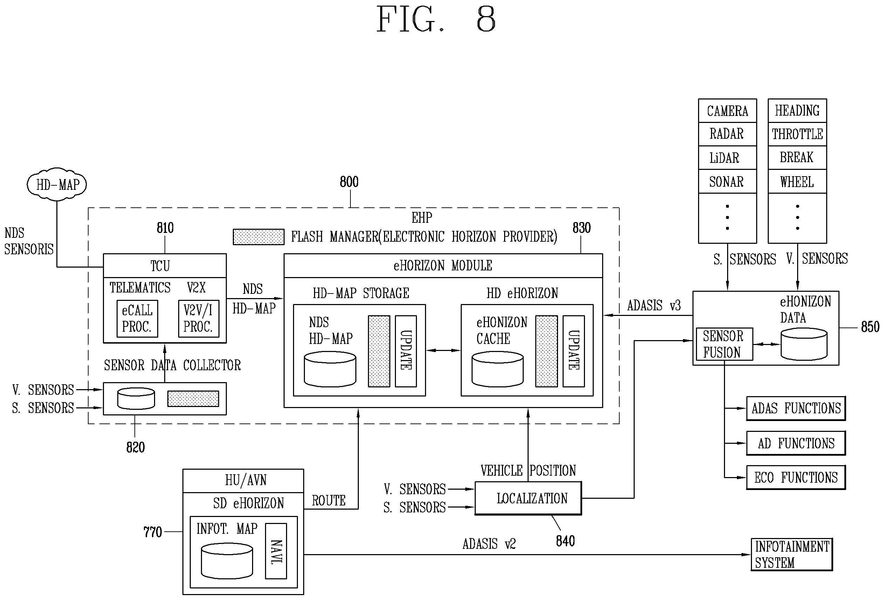

FIG. 8 is a conceptual view for explaining an electronic horizon provider (EHP) associated with the present disclosure.

Referring to FIG. 8, a map providing device 800 associated with the present disclosure may control a vehicle 100 on the basis of eHorizon.

The path providing device 800 may be an electronic horizon provider (EHP).

Here, Electronic Horizon may be referred to as 'ADAS Horizon', 'ADASIS Horizon', 'Extended Driver Horizon' or'eHorizon'.

The eHorizon may be understood as software, a module or a system that performs the functions role of generating a vehicle's forward path information (e.g., using high-definition (HD) map data), configuring the vehicle's forward path information based on a specified standard (protocol) (e.g., a standard specification defined by the ADAS), and transmitting the configured vehicle forward path information to an application (e.g., an ADAS application, a map application, etc.) which may be installed in a module (for example, an ECU, a controller 170, a navigation system 770, etc.) of the vehicle or in the vehicle requiring map information (or path information).

In some systems, the vehicle's forward path (or a path to the destination) is only provided as a single path based on a navigation map. By contrast, according to some implementations described in the present disclosure, eHorizon may provide lane-based path information based on a high-definition (HD) map.

Data generated by eHorizon may be referred to as 'electronic horizon data' or 'eHorizon data'.

The electronic horizon data may be described with driving plan data used when generating a driving control signal of the vehicle 100 in a driving system. For example, the electronic horizon data may be understood as driving plan data in a range from a point where the vehicle 100 is located to horizon.

Here, the horizon may be understood as a point in front of the point where the vehicle 100 is located, by a preset distance, on the basis of a preset travel path. The horizon may denote a point at which the vehicle 100 can reach after a preset period of time from a point where the vehicle 100 is located along a preset driving path. Here, the travel path refers to a path for the vehicle to travel up to a final destination, and may be set by a user input.

Electronic horizon data may include horizon map data and horizon path data. The horizon map data may include at least one of topology data, ADAS data, HD map data, and dynamic data. According to an embodiment, the horizon map data may include a plurality of layers. For example, the horizon map data may include a first layer that matches topology data, a second layer that matches ADAS data, a third layer that matches HD map data, and a fourth layer that matches dynamic data. The horizon map data may further include static object data.

Topology data may be described as a map created by connecting road centers. Topology data is suitable for roughly indicating the position of a vehicle and may be in the form of data mainly used in a navigation for a driver. Topology data may be understood as data for road information excluding lane-related information. Topology data may be generated based on data received by an infrastructure through V2I. Topology data may be based on data generated in an infrastructure. Topology data may be based on data stored in at least one memory included in the vehicle 100.

ADAS data may refer to data related to road information. ADAS data may include at least one of road slope data, road curvature data, and road speed limit data. ADAS data may further include no-passing zone data. ADAS data may be based on data generated in an infrastructure. ADAS data may be based on data generated by the object detecting device 300. ADAS data may be named road information data.

HD map data may include detailed lane-unit topology information of a road, connection information of each lane, and feature information for localization of a vehicle (e.g., traffic signs, lane marking/attributes, road furniture, etc.). HD map data may be based on data generated in an infrastructure.

Dynamic data may include various dynamic information that may be generated on a road. For example, the dynamic data may include construction information, variable-speed lane information, road surface state information, traffic information, moving object information, and the like. Dynamic data may be based on data received by an infrastructure 20. Dynamic data may be based on data generated by the object detecting device 210.

The path providing device 800 may provide map data within a range from a point where the vehicle 100 is located to the horizon. The horizon path data may be described as a trajectory that the vehicle 100 can take within the range from the point where the vehicle 100 is located to the horizon. The horizon path data may include data indicating a relative probability to select one road at a decision point (e.g., fork, intersection, crossroads, etc.). Relative probability may be calculated based on a time taken to arrive at a final destination. For example, if a shorter time is taken to arrive at the final destination when selecting a first road than when selecting a second road at a decision point, the probability to select the first road may be calculated higher than the probability to select the second road.

The horizon path data may include a main path and a sub path. The main path may be understood as a trajectory connecting roads with a higher relative probability to be selected. The sub path may be merged with or diverged from at least one point on the main path. The sub path may be understood as a trajectory connecting at least one road having a low relative probability to be selected at the at least one decision point on the main path.

eHorizon may be classified into categories such as software, a system, a concept, and the like. eHorizon denotes a configuration of fusing real-time events, such as road shape information of a high-definition map, real-time traffic signs, road surface conditions, accidents and the like, under a connected environment of an external server (cloud server), V2X (Vehicle to everything) or the like, and providing the fused information to the autonomous driving system and the infotainment system.

In other words, eHorizon may perform the role of transferring a precision map road shape and real time events in front of the vehicle to autonomous driving systems and infotainment systems under an external server/V2X environment.

In order to effectively transfer eHorizon data (information) transmitted from eHorizon (i.e., external server) to the autonomous driving system and the infotainment system, a data specification and transmission method may be formed in accordance with a technical standard called "Advanced Driver Assistance Systems Interface Specification (ADASIS)."

The vehicle 100 related to the present disclosure may use information, which is received (generated) in eHorizon, in an autonomous driving system and/or an infotainment system.

For example, the autonomous driving system may use information provided by eHorizon in safety and ECO aspects.

In terms of the safety aspect, the vehicle 100 according to the present disclosure may perform an Advanced Driver Assistance System (ADAS) function such as Lane Keeping Assist (LKA), Traffic Jam Assist (TJA) or the like, and/or an AD (AutoDrive) function such as passing, road joining, lane change or the like, by using road shape information and event information received from eHorizon and surrounding object information sensed through the sensing unit 840 provided in the vehicle.

Furthermore, in terms of the ECO aspect, the path providing device 800 may receive slope information, traffic light information, and the like related to a forward road from eHorizon, to control the vehicle so as to get efficient engine output, thereby enhancing fuel efficiency.

The infotainment system may include convenience aspects.

For an example, the vehicle 100 may receive from eHorizon accident information, road surface condition information, and the like related to a road ahead of the vehicle and output them on a display unit (for example, Head Up Display (HUD ), CID, Cluster, etc.) provided in the vehicle, so as to provide guide information for the driver to drive the vehicle safely.

The eHorizon may receive the location information of various event information (e.g., road surface condition information, construction information, accident information, etc.) generated from a road and/or road specific speed limit information from the present vehicle 100 or other vehicles or collect them from an infrastructure (e.g., a measuring device, a sensing device, a camera, etc.) installed on a road.

Furthermore, the event information and the road specific speed limit information may be linked to map information or may be updated.

In addition, the location information of the event information may be divided into units of lanes.

Using the information, the eHorizon (or EHP) of the present disclosure may provide information required for autonomous driving system and infotainment systems to each vehicle based on a precision map capable of determining a road situation (or road information) in units of lanes.

In other words, an Electronic Horizon (eHorizon) Provider (EHP) of the present disclosure may provide an absolute high-definition map using absolute coordinates of road-related information (for example, event information, location information regarding the vehicle 100, etc.) based on a high-definition map.

The road-related information provided by the eHorizon may be information included in a predetermined area (predetermined space) with respect to the vehicle 100.

The EHP may be understood as a component which is included in an eHorizon system and performs functions provided by the eHorizon (or eHorizon system).

The path providing device 800 of the present disclosure may be EHP, as shown in FIG. 8.

The path providing device 800 (EHP) of the present disclosure may receive a high-definition map from an external server (or a cloud server), generate path (route) information to a destination in lane units, and transmit the high-definition map and the path information generated in the lane units to a module or application (or program) of the vehicle requiring the map information and the path information.

Referring to FIG. 8, FIG. 8 illustrates an overall structure of an Electronic Horizon (eHorizon) system of the present disclosure.

The path providing device 800 (EHP) of the present disclosure may include a telecommunication control unit (TCU) 810 that receives a high-definition map (HD-map) existing in a cloud server.

The TCU 810 may be the communication device 400 described above, and may include at least one of components included in the communication device 400.

The TCU 810 may include a telematics module or a vehicle to everything (V2X) module.

The TCU 810 may receive an HD map that complies with the Navigation Data Standard (NDS) (or conforms to the NDS standard) from the cloud server.

In addition, the HD map may be updated by reflecting data sensed by sensors provided in the vehicle and/or sensors installed around road, according to the sensor ingestion interface specification (SENSORIS).

The TCU 810 may download the HD map from the cloud server through the telematics module or the V2X module.

The path providing device 800 according to the present disclosure may include an interface unit 820. The interface unit 820 receives sensing information from one or more sensors provided in the vehicle 100.

The interface unit 820 may be referred to as a sensor data collector.

The sensor data collector 820 collects (receives) information sensed by sensors (V.Sensors) provided in the vehicle for detecting a manipulation of the vehicle (e.g., heading, throttle, break, wheel, etc.) and sensors (S.Sensors) for detecting surrounding information of the vehicle (e.g., Camera, Radar, LiDAR, Sonar, etc.)

The interface unit 820 may transmit the information sensed through the sensors provided in the vehicle to the TCU 810 (or a processor 830) so that the information is reflected in the HD map.

The TCU 810 may update the HD map stored in the cloud server by transmitting the information transmitted from the interface unit 820 to the cloud server.

The path providing device 800 (EHP) of the present disclosure may include a processor 830 (or an eHorizon module).

The processor 830 may control the TCU 810 and the sensor data collector 820.

The processor 830 may store the HD map received through the TCU 810, and update the HD map using the information received through the sensor data collector 820. This operation may be performed in the storage part 832 of the processor 830.

The processor 830 may receive first path information from an audio video navigation (AVN) or a navigation system 770.

The first path information is route information provided in the related art and may be information for guiding a traveling path (travel path, driving path, driving route) to a destination.

In this case, the first path information provided in the related art provides only one path information and does not distinguish lanes.

On the other hand, when the processor 830 receives the first path information, the processor 830 may generate second path information for guiding a driving path to a destination set in the first path information in units of lanes using a high-definition (HD) map and the first path information. For example, the operation may be performed by a calculating part 834 of the processor 830.

In addition, the eHorizon system may include a localization unit 840 for locating a vehicle using information sensed through sensors (V. sensors, S. sensors) provided in the vehicle.

The localization unit 840 may transmit the location information of the vehicle to the processor 830 to match the position of the vehicle identified by using the sensors provided in the vehicle with the HD map.

The processor 830 may match the position of the vehicle 100 with the HD map based on the location information of the vehicle.

The processor 830 may generate horizon map data. The processor 830 may generate horizon map data. The processor 830 may generate horizon path data.

The processor 830 may generate electronic horizon data by reflecting the traveling (driving) situation of the vehicle 100. For example, the processor 830 may generate electronic horizon data based on traveling direction data and traveling speed data of the vehicle 100.

The processor 830 may merge the generated electronic horizon data with previously-generated electronic horizon data. For example, the processor 830 may connect horizon map data generated at a first time point with horizon map data generated at a second time point on the position basis. For example, the processor 830 may connect horizon path data generated at a first time point with horizon path data generated at a second time point on the position basis.

The processor 830 may include a memory, an HD map processing part, a dynamic data processing part, a matching part, and a path generating part.

The HD map processing part may receive HD map data from a server through the TCU. The HD map processing part may store the HD map data. According to an embodiment, the HD map processing part may also process the HD map data. The dynamic data processing part may receive dynamic data from the object detecting device. The dynamic data processing part may receive the dynamic data from a server. The dynamic data processing part may store the dynamic data. In some embodiments, the dynamic data processing part may process the dynamic data.

The matching part may receive an HD map from the HD map processing part. The matching part may receive dynamic data from the dynamic data processing part. The matching part may generate horizon map data by matching the HD map data with the dynamic data.

According to an embodiment, the matching part may receive topology data. The matching part may receive ADAS data. The matching part may generate horizon map data by matching the topology data, the ADAS data, the HD map data, and the dynamic data. The path generating part may generate horizon path data. The path generating part may include a main path generator and a sub path generator. The main path generator may generate main path data. The sub path generator may generate sub path data.

In addition, the eHorizon system may include a fusion unit 850 for fusing information (data) sensed through the sensors provided in the vehicle and eHorizon data generated by the eHorizon module (control unit).

For example, the fusion unit 850 may update an HD map by fusing sensing data sensed by the vehicle with an HD map corresponding to eHorizon data, and provide the updated HD map to an ADAS function, an AD (AutoDrive) function, or an ECO function.

In addition, although not shown, the fusion unit 850 may provide the updated HD map even to the infotainment system.

FIG. 8 illustrates that the path providing device 800 (EHP) of the present disclosure merely includes the TCU 810, the sensor data collector 820, and the processor 830, but the present disclosure is not limited thereto.

The path providing device 800 (EHP) of the present disclosure may further include at least one of the localization unit 840 and the fusion unit 850.

In addition, the path providing device 800 (EHP) of the present disclosure may further include a navigation system 770.

With such a configuration, when at least one of the localization unit 840, the fusion unit 850, and the navigation system 770 is included in the path providing device 800 (EHP) of the present disclosure, the functions/operations/controls performed by the included configuration may be understood as being performed by the processor 830.

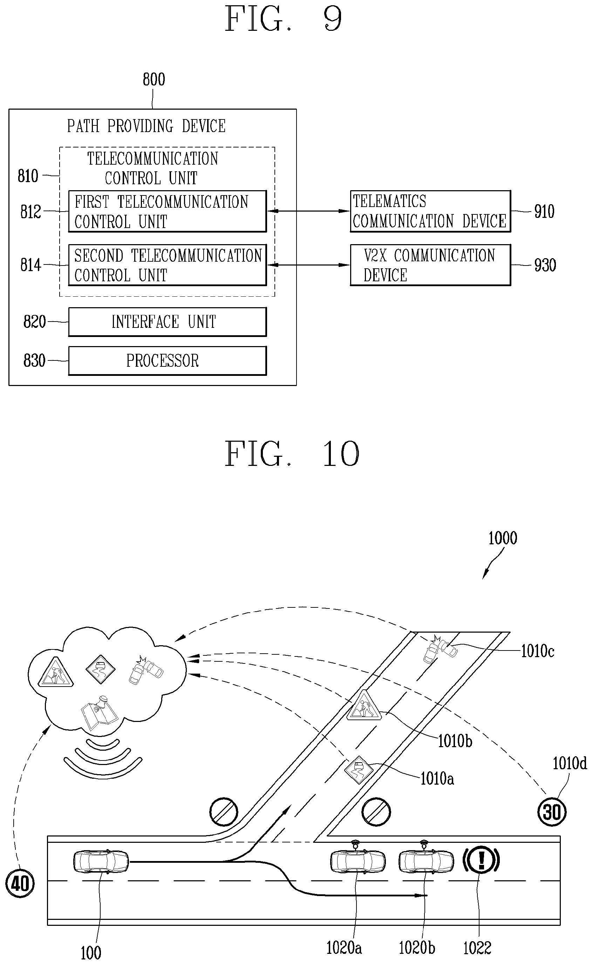

FIG. 9 is a block diagram for explaining the path providing device of FIG. 8 in more detail.

The path providing device refers to a device for providing a route (or path) to a vehicle.

For example, the path providing device may be a device mounted on a vehicle to perform communication through CAN communication and generate messages for controlling the vehicle and/or electric components mounted on the vehicle.

As another example, the path providing device may be located outside the vehicle, like a server or a communication device, and may perform communication with the vehicle through a mobile communication network. In this case, the path providing device may remotely control the vehicle and/or the electric components mounted on the vehicle using the mobile communication network.

The path providing device 800 is provided in the vehicle, and may be implemented as an independent device detachable from the vehicle or may be integrally installed on the vehicle to construct a part of the vehicle 100.

Referring to FIG. 9, the path providing device 800 includes a communication unit 810, an interface unit 820, and a processor 830.

The communication unit 810 is configured to perform communications with various components provided in the vehicle.

For example, the communication unit 810 may receive various information provided through a controller area network (CAN).

The communication unit 810 may include a first communication unit 812, and the first communication unit 812 may receive an HD map provided through telematics. In other words, the first communication unit 812 is configured to perform 'telematics communication'. The first communication unit 812 performing the telematics communication may perform communication with a server and the like by using a satellite navigation system or a base station provided by mobile communication such as 4G or 5G.

The first communication unit 812 may perform communication with a telematics communication device 910. The telematics communication device may include a server provided by a portal provider, a vehicle provider and/or a mobile communication company.

The processor 840 of the path providing device 800 may determine absolute coordinates of road-related information (event information) based on ADAS MAP received from an external server (eHorizon) through the first communication unit 812. In addition, the processor 830 may autonomously drive the vehicle or perform a vehicle control using the absolute coordinates of the road-related information (event information).

The communication unit 810 may include a second communication module 814, and the second communication module 814 may receive various types of information provided through vehicle to everything (V2X) communication. In other words, the second communication module 814 is configured to perform 'V2X communication'. The V2X communication may be defined as a technology of exchanging or sharing information, such as traffic condition and the like, while communicating with road infrastructures and other vehicles during driving.

The second communication module 814 may perform communication with a V2X communication device 930. The V2X communication device may include a mobile terminal belonging to a pedestrian or a person riding a bike, a fixed terminal installed on a road, another vehicle, and the like.

Here, the another vehicle may denote at least one of vehicles existing within a predetermined distance from the vehicle 100 or vehicles approaching by a predetermined distance or shorter with respect to the vehicle 100.

The present disclosure may not be limited thereto, and the another vehicle may include all the vehicles capable of performing communication with the communication unit 810. According to this specification, for the sake of explanation, an example will be described in which the another vehicle is at least one vehicle existing within a predetermined distance from the vehicle 100 or at least one vehicle approaching by a predetermined distance or shorter with respect to the vehicle 100.

The predetermined distance may be determined based on a distance capable of performing communication through the communication unit 810, determined according to a specification of a product, or determined/varied based on a user's setting or V2X communication standard.

The second communication unit 814 may be configured to receive LDM data from another vehicle. The LDM data may be a V2X message (BSM, CAM, DENM, etc.) transmitted and received between vehicles through V2X communication.

The LDM data may include location information related to the another vehicle.

The processor 830 may determine a position of the vehicle of the present disclosure relative to the another vehicle, based on the location information related to the vehicle 100 and the location information related to the another vehicle included in the LDM data received through the second communication unit 814.

In addition, the LDM data may include speed information regarding another vehicle. The processor 830 may also determine a relative speed of the another vehicle using speed information of the vehicle of the present disclosure and the speed information of the another vehicle. The speed information of the vehicle may be calculated using a degree to which the location information of the vehicle received through the communication unit 810 changes over time or calculated based on information received from the driving operation device 500 or the power train driving unit 610 of the vehicle 100.

The second communication unit 814 may be the V2X communication unit 430 described above.

If the communication unit 810 is a component that performs communication with a device located outside the vehicle 100 using wireless communication, the interface unit 820 is a component performing communication with a device located inside the vehicle 100 using wired or wireless communication.

The interface unit 820 may receive information related to driving of the vehicle from most of electric components provided in the vehicle 100. Information transmitted from the electric component provided in the vehicle to the path providing device 800 is referred to as 'vehicle driving information (or vehicle travel information)'.

For example, when the electric component is a sensor, the vehicle driving information may be sensing information sensed by the sensor.

Vehicle driving information includes vehicle information and surrounding information related to the vehicle. Information related to the inside of the vehicle with respect to a frame of the vehicle may be defined as the vehicle information, and information related to the outside of the vehicle may be defined as the surrounding information.

The vehicle information refers to information related to the vehicle itself. For example, the vehicle information may include a traveling speed, a traveling direction, an acceleration, an angular velocity, a location (GPS), a weight, a number of passengers on board the vehicle, a braking force of the vehicle, a maximum braking force, air pressure of each wheel, a centrifugal force applied to the vehicle, a travel mode of the vehicle (autonomous travel mode or manual travel mode), a parking mode of the vehicle (autonomous parking mode, automatic parking mode, manual parking mode), whether or not a user is on board the vehicle, and information associated with the user.

The surrounding information refers to information related to another object located within a predetermined range around the vehicle, and information related to the outside of the vehicle. The surrounding information of the vehicle may be a state of a road surface on which the vehicle is traveling (e.g., a frictional force), the weather, a distance from a preceding (succeeding) vehicle, a relative speed of a preceding (succeeding) vehicle, a curvature of a curve when a driving lane is the curve, information associated with an object existing in a reference region (predetermined region) based on the vehicle, whether or not an object enters (or leaves) the predetermined region, whether or not the user exists near the vehicle, information associated with the user (for example, whether or not the user is an authenticated user), and the like.

The surrounding information may also include ambient brightness, temperature, a position of the sun, information related to a nearby subject (a person, another vehicle, a sign, etc.), a type of a driving road surface, a landmark, line information, and driving lane information, and information required for an autonomous travel/autonomous parking/automatic parking/manual parking mode.

In addition, the surrounding information may further include a distance from an object existing around the vehicle to the vehicle, collision possibility, a type of an object, a parking space for the vehicle, an object for identifying the parking space (for example, a parking line, a string, another vehicle, a wall, etc.), and the like.

The vehicle driving information is not limited to the example described above and may include all information generated from the components provided in the vehicle.

Meanwhile, the processor 830 is configured to control one or more electric components provided in the vehicle using the interface unit 820.

Specifically, the processor 830 may determine whether or not at least one of a plurality of preset conditions is satisfied, based on vehicle driving information received through the communication unit 810. According to a satisfied condition, the processor 830 may control the one or more electric components in different ways.

In connection with the preset conditions, the processor 830 may detect an occurrence of an event in an electric component provided in the vehicle and/or application, and determine whether the detected event meets a preset condition. At this time, the processor 830 may also detect the occurrence of the event from information received through the communication unit 810.

The application may be implemented, for example, as a widget, a home launcher, and the like, and refers to various types of programs that can be executed on the vehicle. Accordingly, the application may be a program that performs various functions, such as a web browser, a video playback, message transmission/reception, schedule management, or application update.

In addition, the application may include at least one of forward collision warning (FCW), blind spot detection (BSD), lane departure warning (LDW), pedestrian detection (PD), Curve Speed Warning (CSW), and turn-by-turn navigation (TBT).

For example, the occurrence of the event may be a missed call, presence of an application to be updated, a message arrival, start on, start off, autonomous travel on/off, pressing of an LCD awake key, an alarm, an incoming call, a missed notification, and the like.

As another example, the occurrence of the event may be a generation of an alert set in the advanced driver assistance system (ADAS), or an execution of a function set in the ADAS. For example, the occurrence of the event may be an occurrence of forward collision warning, an occurrence of blind spot detection, an occurrence of lane departure warning, an occurrence of lane keeping assist warning, or an execution of autonomous emergency braking.

As another example, the occurrence of the event may also be a change from a forward gear to a reverse gear, an occurrence of an acceleration greater than a predetermined value, an occurrence of a deceleration greater than a predetermined value, a change of a power device from an internal combustion engine to a motor, or a change from the motor to the internal combustion engine.

In addition, even when various electronic control units (ECUs) provided in the vehicle perform specific functions, it may be determined as the occurrence of the events.

For example, when a generated event satisfies the preset condition, the processor 830 may control the interface unit 820 to display information corresponding to the satisfied condition on one or more displays provided in the vehicle.

FIG. 10 is a conceptual view for explaining eHorizon associated with the present disclosure.

Referring to FIG. 10, the path providing device 800 according to the present disclosure may autonomously drive the vehicle 100 on the basis of eHorizon.

eHorizon may be classified into categories such as software, a system, a concept, and the like. eHorizon denotes a configuration of fusing real-time events, such as road shape information of a high-definition map, real-time traffic signs, road surface conditions, accidents and the like, under a connected environment of an external server (cloud server), V2X (Vehicle to everything) or the like, and providing the fused information to the autonomous driving system and the infotainment system.

For an example, eHorizon may refer to an external server (a cloud or a cloud server).

In other words, eHorizon may perform the role of transferring a detailed map road shape and real time events in front of the vehicle to autonomous driving systems and infotainment systems under an external server/V2X environment.

In order to transfer eHorizon data (information) transmitted from the eHorizon (i.e., external server) to autonomous driving systems and infotainment systems, a data specification and transmission method may be formed in accordance with a standard called "Advanced Driver Assistance Systems Interface Specification (ADASIS)."

The path providing device 100 related to the present disclosure may use information, which is received from eHorizon, in the autonomous driving system and/or the infotainment system.

For example, the autonomous driving system may be divided into a safety aspect and an ECO aspect.

In terms of the safety aspect, the path providing device 800 according to the present disclosure may perform an Advanced Driver Assistance System (ADAS) function such as Lane Keeping Assist (LKA), Traffic Jam Assist (TJA) or the like, and/or an AD (AutoDrive) function such as passing, road joining, lane change or the like, by using road shape information and event information received from eHorizon and surrounding object information sensed through the sensing unit 840 provided in the vehicle.

Furthermore, in terms of the ECO aspect, the path providing device 800 may receive slope information, traffic light information, and the like related to a forward road from eHorizon, to control the vehicle so as to get efficient engine output, thereby enhancing fuel efficiency.

The infotainment system may include convenience aspects.

For an example, the vehicle 100 may receive from eHorizon accident information, road surface condition information, and the like related to a road ahead of the vehicle and output them on a display unit (for example, Head Up Display (HUD ), CID, Cluster, etc.) provided in the vehicle, so as to provide guide information for the driver to drive the vehicle safely.

Referring to FIG. 10, the eHorizon (external server) may receive location information related to various types of event information (e.g., road surface condition information 1010a, construction information 1010b, accident information 1010c, etc.) occurred on roads and/or road-based speed limit information 1010d from the vehicle 100 or other vehicles 1020a and 1020b or may collect such information from infrastructures (for example, measuring devices, sensing devices, cameras, etc.) installed on the roads.

Furthermore, the event information and the road specific speed limit information may be linked to map information or may be updated.

In addition, the location information of the event information may be divided into units of lanes.

By using such information, the eHorizon (external server) of the present disclosure may provide information needed for the autonomous driving system and the infotainment system to each vehicle, based on a high-definition map capable of determining a road situation (or road information) in lane units.

In other words, the eHorizon (external server) of the present disclosure may provide an absolute high-definition map using absolute coordinates of road-related information (for example, event information, position information regarding the vehicle 100, etc.) based on a high-definition map.

The road-related information provided by the eHorizon may be information corresponding to a predetermined region (predetermined space) with respect to the vehicle 100.

On the other hand, the path providing device of the present disclosure may acquire location information related to another vehicle through communication with the another vehicle. Communication with the another vehicle may be performed through V2X (Vehicle to everything) communication, and data transmitted/received to/from the another vehicle through the V2X communication may be data in a format defined by a Local Dynamic Map (LDM) standard.

The LDM denotes a conceptual data storage located in a vehicle control unit (or ITS station) including information related to a safe and normal operation of an application (or application program) provided in a vehicle (or an intelligent transport system (ITS)). The LDM may, for example, comply with EN standards.

The LDM differs from the foregoing ADAS MAP in the data format and transmission method. For an example, the ADAS MAP may correspond to a high-definition map having absolute coordinates received from eHorizon (external server), and the LDM may denote an high-definition map having relative coordinates based on data transmitted and received through V2X communication.

The LDM data (or LDM information) denotes data mutually transmitted and received through V2X communication (vehicle to everything) (for example, V2V (Vehicle to Vehicle) communication, V2I (Vehicle to Infra) communication, or V2P (Vehicle to Pedestrian) communication).

The LDM may be implemented, for example, by a storage for storing data transmitted and received through V2X communication, and the LDM may be formed (stored) in a vehicle control device provided in each vehicle.

The LDM data (or LDM information) denotes data mutually transmitted and received through V2X communication (vehicle to everything) (for example, V2V (Vehicle to Vehicle) communication, V2I (Vehicle to Infra) communication, or V2P (Vehicle to Pedestrian) communication). The LDM data may include a Basic Safety Message (BSM), a Cooperative Awareness Message (CAM), and a Decentralized Environmental Notification message (DENM), and the like, for example.

The LDM data may be referred to as a V2X message or an LDM message, for example.

The vehicle control device related to the present disclosure may efficiently manage LDM data (or V2X messages) transmitted and received between vehicles using the LDM.

Based on LDM data received via V2X communication, the LDM may store, distribute to another vehicle, and continuously update all relevant information (for example, a location, a speed, a traffic light status, weather information, a road surface condition, and the like of the vehicle (another vehicle)) related to a traffic situation around a place where the vehicle is currently located (or a road situation for an area within a predetermined distance from a place where the vehicle is currently located).

For example, a V2X application provided in the path providing device 800 registers in the LDM, and receives a specific message such as all the DENMs in addition to a warning about a failed vehicle. Then, the LDM may automatically assign the received information to the V2X application, and the V2X application may control the vehicle based on the information assigned from the LDM.

As described above, the vehicle of the present disclosure may control the vehicle using the LDM formed by the LDM data collected through V2X communication.

The LDM associated with the present disclosure may provide road-related information to the vehicle control device. The road-related information provided by the LDM provides only a relative distance and a relative speed with respect to another vehicle (or an event generation point), other than map information having absolute coordinates.

In other words, the vehicle of the present disclosure may perform autonomous driving using an ADAS MAP (absolute coordinates HD map) according to the ADASIS standard provided by eHorizon, but the map may be used only to determine a road condition in a surrounding area of the vehicle.

In addition, the vehicle of the present disclosure may perform autonomous driving using an LDM (relative coordinates HD map) formed by LDM data received through V2X communication, but there is a limitation in that accuracy is inferior due to insufficient absolute position information.

The path providing device included in the vehicle of the present disclosure may generate a fused definition map using the ADAS MAP received from the eHorizon and the LDM data received through the V2X communication, and control (autonomously drive) the vehicle in an optimized manner using the fused definition map.

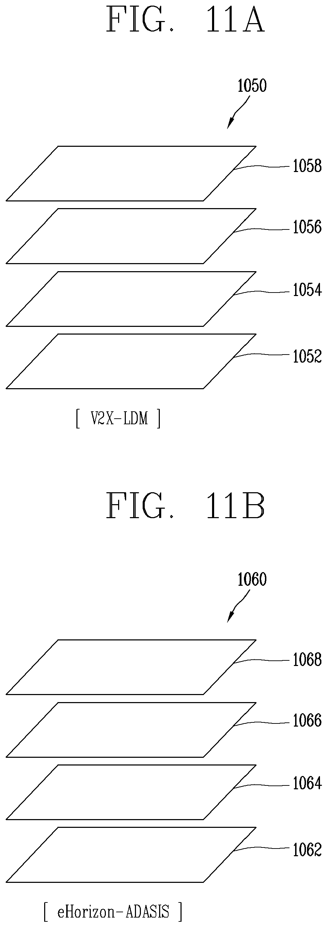

FIG. 11A illustrates an example of a data format of LDM data (or LDM) transmitted and received between vehicles via V2X communication, and FIG. 11B illustrates an example of a data format of an ADAS MAP received from an external server (eHorizon).

Referring to FIG. 11A, the LDM data (or LDM) 1050 may be formed to have four layers.

The LDM data 1050 may include a first layer 1052, a second layer 1054, a third layer 1056 and a fourth layer 1058.

The first layer 1052 may include static information, for example, map information, among road-related information.

The second layer 1054 may include landmark information (for example, specific place information specified by a maker among a plurality of place information included in the map information) among information associated with road. The landmark information may include location information, name information, size information, and the like.

The third layer 1056 may include traffic situation related information (for example, traffic light information, construction information, accident information, etc.) among information associated with roads. The construction information and the accident information may include position information.

The fourth layer 1058 may include dynamic information (for example, object information, pedestrian information, other vehicle information, etc.) among the road-related information. The object information, pedestrian information, and other vehicle information may include location information.

In other words, the LDM data 1050 may include information sensed through a sensing unit of another vehicle or information sensed through a sensing unit of the vehicle of the present disclosure, and may include road-related information that is transformed in real time as it goes from the first layer to the fourth layer.

Referring to FIG. 11B, the ADAS MAP may be formed to have four layers similar to the LDM data.

The ADAS MAP 1060 may denote data received from eHorizon and formed to conform to the ADASIS specification.

The ADAS MAP 1060 may include a first layer 1062 to the fourth layer 1068.

The first layer 1062 may include topology information. The topology information, for example, is information that explicitly defines a spatial relationship, and may indicate map information.

The second layer 1064 may include landmark information (for example, specific place information specified by a maker among a plurality of place information included in the map information) among information associated with the road. The landmark information may include position information, name information, size information, and the like.

The third layer 1066 may include highly detailed map information. The highly detailed MAP information may be referred to as an HD-MAP, and road-related information (for example, traffic light information, construction information, accident information) may be recorded in the lane unit. The construction information and the accident information may include location information.

The fourth layer 1068 may include dynamic information (for example, object information, pedestrian information, other vehicle information, etc.). The object information, pedestrian information, and other vehicle information may include location information.

In other words, the ADAS MAP 1060 may include road-related information that is transformed in real time as it goes from the first layer to the fourth layer, similarly to the LDM data 1050.

The processor 830 may autonomously drive the vehicle 100.

For example, the processor 830 may autonomously drive the vehicle 100 based on vehicle driving information sensed through various electric components provided in the vehicle 100 and information received through the communication unit 810.

Specifically, the processor 830 may control the communication unit 810 to acquire the location information of the vehicle. For example, the processor 830 may acquire the location information (location coordinates) of the vehicle 100 through the location information unit 420 of the communication unit 810.

Furthermore, the processor 830 may control the first communication unit 812 of the communication unit 810 to receive map information from an external server. Here, the first communication unit 812 may receive ADAS MAP from the external server (eHorizon). The map information may be included in the ADAS MAP.

In addition, the processor 830 may control the second communication unit 814 of the communication unit 810 to receive location information of another vehicle from the another vehicle. Here, the second communication unit 814 may receive LDM data from the another vehicle. The location information of the another vehicle may be included in the LDM data.

The another vehicle denotes a vehicle existing within a predetermined distance from the vehicle, and the predetermined distance may be a communication-available distance of the communication unit 810 or a distance set by a user.

The processor 830 may control the communication unit to receive the map information from the external server and the position information of the another vehicle from the another vehicle.

Furthermore, the processor 830 may fuse the acquired location information of the vehicle and the received location information of the another vehicle into the received map information, and control the vehicle 100 based on at least one of the fused map information and vehicle-related information sensed through the sensing unit 840.

Here, the map information received from the external server may denote HD map information (HD-MAP) included in the ADAS MAP. The HD map information may be recorded with road-related information in the lane unit.

The processor 830 may fuse the location information of the vehicle 100 and the location information of the another vehicle into the map information in the lane unit. In addition, the processor 830 may fuse the road-related information received from the external server and the road-related information received from the another vehicle into the map information in the lane unit.

The processor 830 may generate ADAS MAP required for the control of the vehicle using the ADAS MAP received from the external server and the vehicle-related information received through the sensing unit 840.

Specifically, the processor 830 may apply the vehicle-related information sensed within a predetermined range through the sensing unit 840 to the map information received from the external server.

Here, the predetermined range may be an available distance which can be sensed by an electric component provided in the vehicle 100 or may be a distance set by a user.

The processor 830 may control the vehicle by applying the vehicle-related information sensed within the predetermined range through the sensing unit to the map information and then additionally fusing the location information of the another vehicle thereto.

In other words, when the vehicle-related information sensed within the predetermined range through the sensing unit is applied to the map information, the processor 830 may use only the information within the predetermined range from the vehicle, and thus a range capable of controlling the vehicle may be local.

However, the position information of the another vehicle received through the V2X module may be received from the another vehicle existing in a space out of the predetermined range. It may be because the communication-available distance of the V2X module communicating with the another vehicle through the V2X module is farther than a predetermined range of the sensing unit 840.

As a result, the processor 830 may fuse the location information of the another vehicle included in the LDM data received through the second communication module 814 into the map information on which the vehicle-related information has been sensed, so as to acquire the location information of the another vehicle existing in a broader range and more effectively control the vehicle using the acquired information.

For example, it is assumed that a plurality of other vehicles is crowded ahead in a lane in which the vehicle of the present disclosure exists, and it is also assumed that the sensing unit can sense only location information related to an immediately preceding vehicle.

In this case, when only vehicle-related information sensed within a predetermined range on map information is used, the processor 830 may generate a control command for controlling the vehicle such that the vehicle overtakes the preceding vehicle.

However, a plurality of other vehicles may actually exist ahead, which may make the vehicle difficult to overtake other vehicles.

At this time, the present disclosure may acquire the location information of another vehicle received through the V2X module. At this time, the received location information related to the another vehicle may include location information related to not only a preceding vehicle of the vehicle 100 but also a plurality of other vehicles ahead of the preceding vehicle.

The processor 830 may additionally fuse the location information related to the plurality of other vehicles acquired through the V2X module into map information to which the vehicle-related information is applied, so as to determine a situation where it is inappropriate to overtake the preceding vehicle.

With such configuration, the present disclosure can overcome the related art technical limitation that only vehicle-related information acquired through the sensing unit 840 is merely fused to high-definition map information and thus autonomous driving is enabled only within a predetermined range. In other words, the present disclosure can achieve more accurate and stable vehicle control by additionally fusing information related to other vehicles (e.g., speeds, locations of other vehicles), which have been received from the other vehicles located at a farther distance than the predetermined range through the V2X module, as well as vehicle-related information sensed through the sensing unit, into map information.

Vehicle control described herein may include at least one of autonomously driving the vehicle 100 and outputting a warning message associated with the driving of the vehicle.

Hereinafter, description will be given in more detail of a method in which a processor controls a vehicle using LDM data received through a V2X module, ADAS MAP received from an external server (eHorizon), and vehicle-related information sensed through a sensing unit provided in the vehicle, with reference to the accompanying drawings.

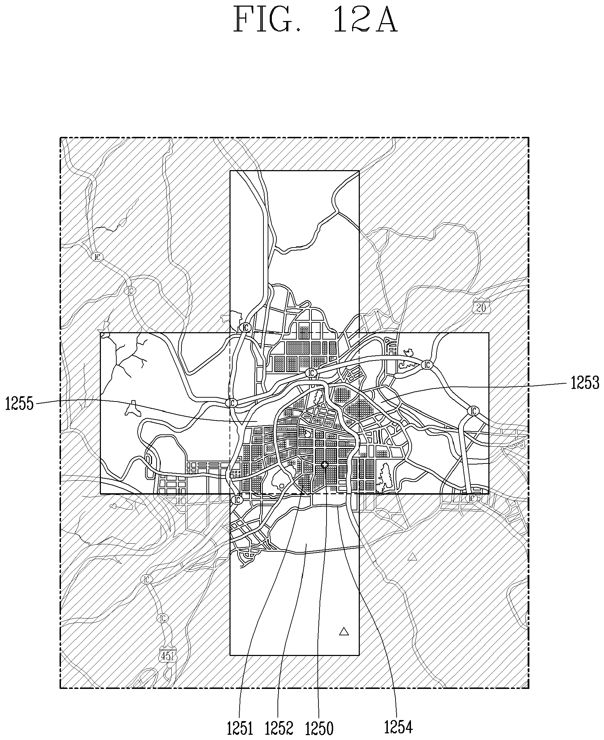

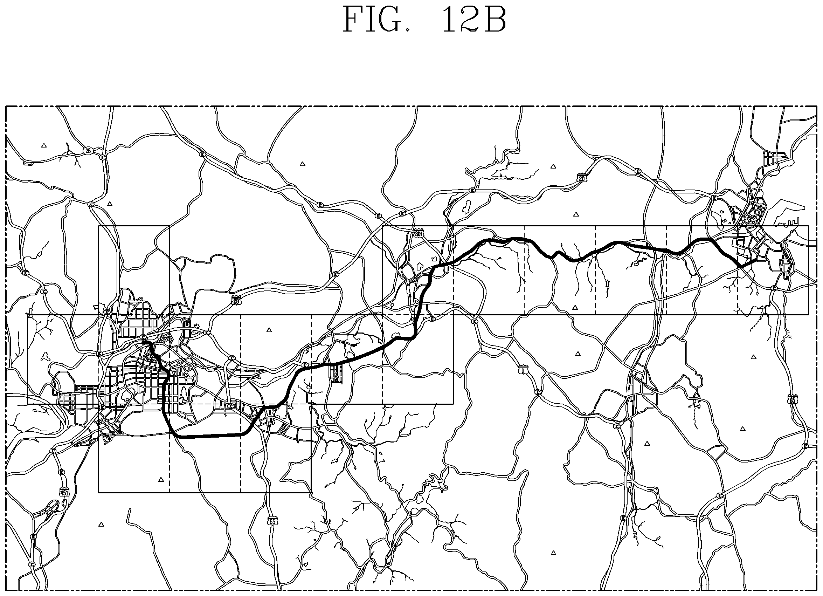

FIGS. 12A and 12B are exemplary views illustrating a method in which a communication device receives high-definition map data in accordance with an embodiment of the present disclosure.

The server may divide HD map data into tile units and provide them to the path providing device 800. The processor 830 may receive HD map data in tile units from the server or another vehicle through the communication unit 810. Hereinafter, HD map data received in tile units is referred to as 'HD map tile'.

The HD map data is divided into tiles having a predetermined shape, and each tile corresponds to a different portion of the map. When connecting all the tiles, the full HD map data is acquired. Since the HD map data has a high capacity, the vehicle 100 should be provided with a high-capacity memory in order to download and use the full HD map data. As communication technologies are developed, it is more efficient to download, use, and delete HD map data in tile units, rather than to provide the high-capacity memory in the vehicle 100.

In the present disclosure, for the convenience of description, a case in which the predetermined shape is rectangular is described as an example, but the predetermined shape may be modified to various polygonal shapes.

The processor 830 may store the downloaded HD map tile in the memory 140. The processor 830 may delete the stored HD map tile. For example, the processor 830 may delete the HD map tile when the vehicle 100 leaves an area corresponding to the HD map tile. For example, the processor 830 may delete the HD map tile when a preset time elapses after storage.

As illustrated in FIG. 12A, when there is no preset destination, the processor 830 may receive a first HD map tile 1251 including a location (position) 1250 of the vehicle 100. The server receives data of the location 1250 of the vehicle 100 from the vehicle 100, and transmits the first HD map tile 1251 including the location 1250 of the vehicle 100 to the vehicle 100. In addition, the processor 830 may receive HD map tiles 1252, 1253, 1254, and 1255 around the first HD map tile 1251. For example, the processor 830 may receive the HD map tiles 1252, 1253, 1254, and 1255 that are adjacent to top, bottom, left, and right sides of the first HD map tile 1251, respectively. In this case, the processor 830 may receive a total of five HD map tiles. For example, the processor 830 may further receive HD map tiles located in a diagonal direction, together with the HD map tiles 1252, 1253, 1254, and 1255 adjacent to the top, bottom, left, and right sides of the first HD map tile 1251. In this case, the processor 830 may receive a total of nine HD map tiles.

As illustrated in FIG. 12B, when there is a preset destination, the processor 830 may receive tiles associated with a path from the location 1250 of the vehicle 100 to the destination. The processor 830 may receive a plurality of tiles to cover the path.

The processor 830 may receive all the tiles covering the path at one time.

Alternatively, the processor 830 may receive the entire tiles in a dividing manner while the vehicle 100 travels along the path. The processor 830 may receive only at least some of the entire tiles based on the location of the vehicle 100 while the vehicle 100 travels along the path. Thereafter, the processor 830 may continuously receive tiles during the travel of the vehicle 100 and delete the previously received tiles.

The processor 830 may generate electronic horizon data based on the HD map data.

The vehicle 100 may travel in a state where a final destination is set. The final destination may be set based on a user input received via the user interface device 200 or the communication device 220. According to an embodiment, the final destination may be set by the driving system 710.

In the state where the final destination is set, the vehicle 100 may be located within a preset distance from a first point during driving. When the vehicle 100 is located within the preset distance from the first point, the processor 830 may generate electronic horizon data having the first point as a start point and a second point as an end point. The first point and the second point may be points on the path heading to the final destination. The first point may be described as a point where the vehicle 100 is located or will be located in the near future. The second point may be described as the horizon described above.

The processor 830 may receive an HD map of an area including a section from the first point to the second point. For example, the processor 830 may request an HD map for an area within a predetermined radial distance from the section between the first point and the second point and receive the requested HD map.

The processor 830 may generate electronic horizon data for the area including the section from the first point to the second point, based on the HD map. The processor 830 may generate horizon map data for the area including the section from the first point to the second point. The processor 830 may generate horizon path data for the area including the section from the first point to the second point. The processor 830 may generate a main path for the area including the section from the first point to the second point. The processor 830 may generate data of a sub path for the area including the section from the first point to the second point.

When the vehicle 100 is located within a preset distance from the second point, the processor 830 may generate electronic horizon data having the second point as a start point and a third point as an end point. The second point and the third point may be points on the path heading to the final destination. The second point may be described as a point where the vehicle 100 is located or will be located in the near future. The third point may be described as the horizon described above. Meanwhile, the electronic horizon data having the second point as the start point and the third point as the end point may be geographically connected to the electronic horizon data having the first point as the start point and the second point as the end point.

The operation of generating the electronic horizon data using the second point as the start point and the third point as the end point may be performed by correspondingly applying the operation of generating the electronic horizon data having the first point as the start point and the second point as the end point.

According to an embodiment, the vehicle 100 may travel even when the final destination is not set.

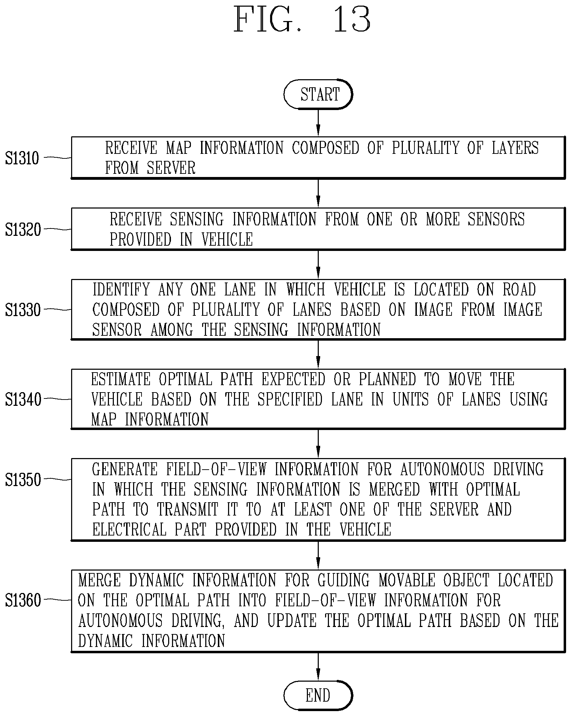

FIG. 13 is a flowchart illustrating a path providing method of the path providing device of FIG. 9.

The processor 830 receives a high-definition (HD) map from an external server. In detail, the processor 830 may receive map information (HD map) having a plurality of layers from a server (external server or cloud server) (S1310).

The external server is a device capable of performing communication through the first communication unit 812 and is an example of the telematics communication device 910. The high-definition (HD) map includes a plurality of layers. The HD map is ADAS MAP and may include at least one of the four layers described above with reference to FIG. 11B.

The map information may include the horizon map data described above. The horizon map data may mean an ADAS MAP including a plurality of layers while satisfying the ADASIS standard described in FIG. 11B.

Also, the processor 830 of the path providing device may receive sensing information from one or more sensors provided in the vehicle [S1320]. The sensing information may mean information sensed by each sensor (or information processed after being sensed). The sensing information may include various information according to a type of data sensed by the sensor.

The processor 830 may specify any one lane on a road including a plurality of lanes on which the vehicle 100 is located based on an image received from an image sensor among the sensing information [S1330]. Here, the lane means a lane on which the vehicle 100 equipped with the path providing device 800 is currently traveling.

The processor 830 may determine a lane on which the vehicle 100 equipped with the path providing device 800 is traveling by using (analyzing) an image received from an image sensor (or camera) among the sensors.

In addition, the processor 830 may estimate an optimal path in lane units on which the vehicle 100 is expected or planned to travel by using map information based on the specified lane [S1340]. Here, the optimal path may mean the horizon path data or main path described above. However, the present disclosure is not limited thereto, and the optimal path may further include a sub path. Here, the optimal path may be referred to as Most Preferred Path or Most Probable Path, and may be abbreviated as MPP.

That is, the processor 830 may use map information to estimate or plan an optimal path in lane units on which the vehicle 100 may travel to a destination based on a specific lane on which the vehicle 100 is traveling.

The processor 830 may generate autonomous driving visibility information in which sensing information is fused to an optimal path to transmit the information to at least one of the server and an electric component provided in the vehicle [S1350].

Here, the autonomous driving visibility information may mean electronic horizon information (or electronic horizon data) described above. The autonomous driving visibility information is information (or data, environment) used when the vehicle 100 performs autonomous driving in lane units. The information may refer to environment data for autonomous driving in which all information (map information, vehicles, objects, moving objects, environment, weather, etc.) within a predetermined range is fused based on a road including an optimal path on which the vehicle 100 will travel or an optimal path, as illustrated in FIG. 10. The environment data for autonomous driving may refer to data (or a comprehensive data environment) that is a basis for the processor 830 of the vehicle 100 to autonomously drive the vehicle 100 or a basis in calculating an optimal path of the vehicle 100.

Meanwhile, the autonomous driving visibility information may refer to information for guiding a driving path in lane units. The autonomous driving visibility information is information in which at least one of sensing information and dynamic information is fused to an optimal path, and finally, may guide a vehicle a driving path in lane units.

When the autonomous driving visibility information refers to information for guiding a driving path in lane units, the processor 830 may generate different autonomous driving visibility information depending on whether a destination is set in the vehicle 100.

For example, when a destination is set in the vehicle 100, the processor 830 may generate autonomous driving visibility information for guiding a driving path (travel path) to the destination in lane units.

As another example, when a destination is not set in the vehicle 100, the processor 830 may calculate a main path (Most Preferred Path (MPP)) on which the vehicle 100 is most likely to travel, and generate autonomous driving visibility information for guiding the main path (MPP) in lane units. In this case, the autonomous driving visibility information may further include sub path information related to a sub path, which is branched from the main path (MPP) and on which the vehicle 100 is likely to travel with a higher probability than a predetermined reference.

The autonomous driving visibility information may provide a driving path up to a destination for each lane drawn on the road, thereby providing more precise and detailed path information. The autonomous driving visibility information may be path information that complies with the standard of ADAS IS v3.

The processor 830 may fuse dynamic information guiding a movable object located on the optimal path with the autonomous driving visibility information, and update the optimal path based on the dynamic information (S1360). The dynamic information may be included in map information received from a server, and may be information included in any one of a plurality of layers (for example, information included in the fourth layer 1068).

The description given above is summarized as follows.

The processor 830 may generate autonomous driving visibility information for guiding a road located ahead of the vehicle in lane units by using the HD map.

The processor 830 receives sensing information from one or more sensors provided in the vehicle 100 through the interface unit 820. The sensing information may be vehicle driving information.

The processor 830 may specify any one lane on a road including a plurality of lanes on which the vehicle is located, based on an image received from an image sensor among the sensing information. For example, when the vehicle 100 is driving on a first lane of an 8-lane road, the processor 830 may specify the first lane as a lane on which the vehicle 100 is located based on the image received from the image sensor.

The processor 830 may estimate an optimal path in lane units on which the vehicle is expected or planned to travel by using the map information based on the specified lane.

Here, the optimal path may be referred to as Most Preferred Path or Most Probable Path, and may be abbreviated as MPP.

The vehicle 100 may autonomously drive along the optimal path. In a case of manual driving, the vehicle 100 may provide navigation information that guides the optimal path to a driver.

The processor 830 may generate autonomous driving visibility information in which the sensing information is fused to the optimal path. The autonomous driving visibility information may be referred to as 'eHorizon' or 'Electronic Horizon' or 'Electronic Horizon Data'.

The processor 830 may use different autonomous driving visibility information according to whether a destination is set in the vehicle 100.

For example, when a destination is set in the vehicle 100, the processor 830 may generate an optimal path in lane units for guiding a driving path (travel path) to the destination by using autonomous driving visibility information.

As another example, when a destination is not set in the vehicle 100, the processor 830 may calculate a main path in lane units on which the vehicle 100 is most likely to travel by using autonomous driving visibility information. In this case, the autonomous driving visibility information may further include sub path information related to a sub path, which is branched from the main path (MPP) and on which the vehicle 100 is likely to travel with a higher probability than a predetermined reference.

The autonomous driving visibility information may be configured to provide a driving path up to a destination for each lane drawn on the road, thereby providing more precise and detailed path information. The path information may be path information that complies with the standard of ADASIS v3.

The autonomous driving visibility information may be configured to provide a subdivision of a path in lane units on which a vehicle should travel or allowed to travel. The autonomous driving visibility information may include information for guiding a driving path to a destination in lane units. When the autonomous driving visibility information is displayed on a display mounted on the vehicle 100, guide lines for guiding lanes on a map on which a vehicle is allowed to travel and information within a predetermined range based on the vehicle (for example, a road, landmarks, other vehicles, surrounding objects, weather information, etc.) may be displayed. In addition, a graphic object indicating the position of the vehicle 100 may be included on at least one lane in which the vehicle 100 is located among a plurality of lanes included in a map.

Dynamic information for guiding a movable object located on the optimal path may be fused to the autonomous driving visibility information. The dynamic information is received by the processor 830 through the communication unit 810 and/or the interface unit 820, and the processor 830 may update the optimal path based on the dynamic information. As the optimal path is updated, the autonomous driving visibility information is also updated.

The dynamic information may include dynamic data.

The processor 830 may provide the autonomous driving visibility information to at least one electronic component provided in the vehicle. In addition, the processor 830 may also provide the autonomous driving visibility information to various applications installed in the systems of the vehicle 100.

The electric component refers to any device mounted on the vehicle 100 and capable of performing communication, and may include the components 120 to 700 described above with reference to FIG. 7. For example, the object detecting device 300 such as a radar or a LiDAR, the navigation system 770, the vehicle driving device 600, and the like may be included in the electric components.

In addition, the electrical component may further include an application executable in the processor 830 or a module that executes the application.

The electric component may perform its own function based on the autonomous driving visibility information.

The autonomous driving visibility information may include a path in lane units and the location of the vehicle 100, and may include dynamic information including at least one object to be sensed by the electric component. The electric component may reallocate resources to sense an object corresponding to the dynamic information, determine whether the dynamic information matches sensing information sensed by the electric component itself, or change a setting value for generating sensing information.

The autonomous driving visibility information includes a plurality of layers, and the processor 830 may selectively transmit at least one of the layers according to an electronic component receiving the autonomous driving visibility information.

Specifically, the processor 830 may select at least one of a plurality of layers in which the path providing device is included in the autonomous driving visibility information, based on at least one of a function executed by the electronic component and a function to be executed. In addition, the processor 830 may transmit a selected layer to the electronic component, and may not transmit unselected layers to the electronic component.

The processor 830 may receive external information generated by an external device from the external device which is located within a predetermined range with respect to the vehicle.

The predetermined range refers to a distance at which the second communication unit 914 can perform communication, and may vary according to performance of the second communication unit 914. When the second communication unit 914 performs V2X communication, a V2X communication-available range may be defined as the predetermined range.

Furthermore, the predetermined range may vary according to an absolute speed of the vehicle 100 and/or a relative speed with the external device.

The processor 830 may determine the predetermined range based on the absolute speed of the vehicle 100 and/or the relative speed with the external device, and permit the communication with external devices located within the determined predetermined range.

Specifically, based on the absolute speed of the vehicle 100 and/or the relative speed with the external device, external devices that can perform communication through the second communication module 914 may be classified into a first group or a second group. External information received from external devices included in the first group is used to generate dynamic information, which will be described below, but external information received from external devices included in the second group is not used to generate the dynamic information. Even when external information is received from the external devices included in the second group, the processor 830 ignores the external information.

The processor 830 may generate dynamic information related to an object to be sensed by at least one electric component provided in the vehicle based on the external information, and match the dynamic information to the autonomous driving visibility information.

For example, the dynamic information may correspond to the fourth layer described above with reference to FIGS. 11A and 11B.

As described above with reference to FIGS. 11A and 11B, the path providing device 800 may receive the ADAS MAP and/or the LDM data. Specifically, the path providing device 800 may receive the ADAS MAP from the telematics communication device 910 through the first communication unit 812, and the LDM data from the V2X communication device 920 through the second communication unit 814.

The ADAS MAP and the LDM data may be provided with a plurality of layers having the same format. The processor 830 may select at least one layer from the ADAS MAP, select at least one layer from the LDM data, and generate the autonomous driving visibility information including the selected layers.

For example, after selecting the first to third layers of the ADAS MAP and selecting the fourth layer of the LDM data, one autonomous driving visibility information may be generated by matching those four layers into one. In this case, the processor 830 may transmit a refusal message for refusing the transmission of the fourth layer to the telematics communication device 910. This is because receiving partial information excluding the fourth layer uses less resources of the first communication module 812 than receiving all information including the fourth layer. By matching part of the ADAS MAP with part of the LDM data, complementary information can be utilized.

For another example, after selecting the first to fourth layers of the ADAS MAP and selecting the fourth layer of the LDM data, one autonomous driving visibility information may be generated by matching those five layers into one. In this case, priority may be given to the fourth layer of the LDM data. If the fourth layer of the ADMS MAP includes information which does not match the fourth layer of the LDM data, the processor 830 may delete the mismatched information or correct the mismatched information based on the LDM data.

The dynamic information may be object information for guiding a predetermined object. For example, the dynamic information may include at least one of position coordinates for guiding the position of the predetermined object, and information guiding the shape, size, and kind of the predetermined object.

The predetermined object may refer to an object that disturbs driving in a corresponding lane among objects that can be driven on a road.

For example, the predetermined object may include a bus stopped at a bus stop, a taxi stopped at a taxi stand or a truck from which articles are being put down.

As another example, the predetermined object may include a garbage truck that travels at a predetermined speed or slower or a large-sized vehicle (e.g., a truck or a container truck, etc.) that is determined to obstruct a driver's vision.

As another example, the predetermined object may include an object informing of an accident, road damage or construction.

As described above, the predetermined object may include all kinds of objects blocking a lane so that driving of the vehicle 100 is impossible or interrupted. The predetermined object may correspond to an icy road, a pedestrian, another vehicle, a construction sign, a traffic signal such as a traffic light, or the like that the vehicle 100 should avoid, and may be received by the path providing device 800 as the external information.

The processor 830 may determine whether or not the predetermined object guided by the external information is located within a reference range based on the travel path of the vehicle 100.

Whether or not the predetermined object is located within the reference range may vary depending on a lane in which the vehicle 100 is traveling and the position of the predetermined object.

For example, external information for guiding a sign indicating the construction on a third lane 1 km ahead of the vehicle while the vehicle is traveling in a first lane may be received. If the reference range is set to 1 m based on the vehicle 100, the sign is located outside the reference range. This is because the third lane is located outside the reference range of 1 m based on the vehicle 100 if the vehicle 100 is continuously traveling in the first lane. On the other hand, if the reference range is set to 10 m based on the vehicle 100, the sign is located within the reference range.

The processor 830 may generate the dynamic information based on the external information when the predetermined object is located within the reference range, but may not generate the dynamic information when the predetermined object is located outside the reference range. That is, the dynamic information may be generated only when the predetermined object guided by the external information is located on the driving path of the vehicle 100 or is within a reference range that may affect the driving path of the vehicle 100.

The path providing device according to the present disclosure may generate autonomous driving visibility information by integrating information received through the first communication unit and information received through the second communication unit into one, which may result in generating and providing autonomous driving visibility information capable of complementing different types of information provided through such different communication units. This is because information received through the first communication module cannot reflect information in real time but such limitation can be complemented by information received through the second communication module.

Furthermore, when there is information received through the second communication module, the processor 830 controls the first communication module so as not to receive information corresponding to the received information, so that the bandwidth of the first communication module can be used less than that used in the related art. That is, the resource usage of the first communication unit can be minimized.

Hereinafter, a path providing device of the present disclosure and a control method thereof capable of including at least one component as described above will be described in more detail with reference to the accompanying drawings.

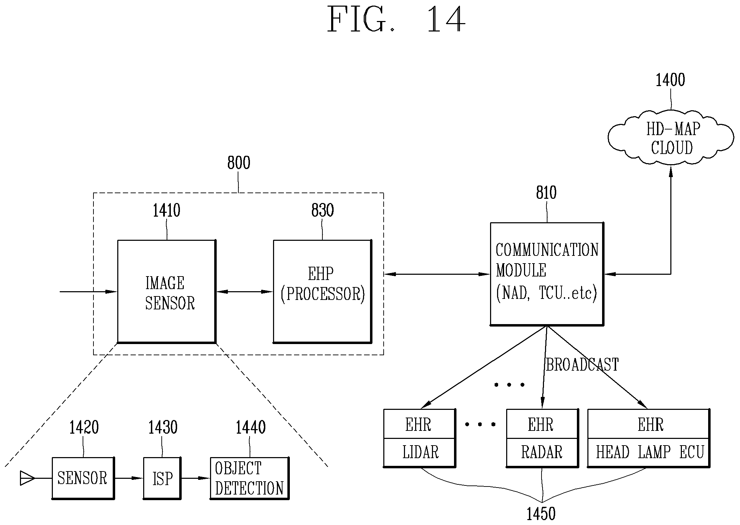

FIGS. 14, 15, 16, and 17 are conceptual views illustrating various embodiments in which an image sensor is included in a path providing device according to the present disclosure.

The path providing device according to one embodiment of the present disclosure may not include the aforementioned communication unit 810. The communication unit 810 (or communication module) may receive information generated (or processed) by the processor 830 included in the path providing device 800 through wired communication (e.g., Controller Area Network (CAN) communication).

The communication unit 810 may be provided in the vehicle, independent of the path providing device 800.

In addition, the path providing device 800 according to the present disclosure may include an image sensor 1410. The image sensor 1410 may be a camera, and may receive (or process) an image (e.g., still image or moving image).

The image sensor 1410, as illustrated in FIG. 14, may include a sensor 1420 for receiving an image, an image signal processor (ISP) 1430, and an object detector 1440 .

The sensor 1420 refers to a sensor that directly receives and senses light received by the image sensor 1410. A signal detected by the sensor 1420 may be processed into an image through the ISP 1430. The object detector 1440 may detect (determine, decide) an object using , The object detection unit 1440 may detect (determine, determine) an object using the processed image.

The image sensor 1410 may be a camera and may be included in the path providing device 800 in the present disclosure.

Specifically, as illustrated in FIG. 14, the processor 830 and the image sensor 1410 of the path providing device 800 may be provided on one printed circuit board.

The processor 830 and the image sensor 1410 may directly perform communication with each other through circuits provided on the printed circuit board. Here, directly performing communication may mean performing communication through circuits printed (provided) on the printed circuit board.

In addition, as described above, in the case of FIG. 14, the communication unit 810 may refer to a communication module provided in the vehicle. When the communication module is provided in the vehicle and is not included in the path providing device, the interface unit 820 may be connected to the communication module 810 provided in the vehicle in a wired manner. That is, the processor 830 may perform a wired connection (e.g., CAN communication) with the communication module 810 through the interface unit 820.

The communication module 810 may be configured to transmit data (or information) processed by the processor 830 to at least one of electric components and sensors 1450 provided in the vehicle, and a server 1400 through wired or wireless communication.

For example, the processor 830 may transmit data (information) to be transmitted to the server and/or data (information) to be transmitted to the electric components and the sensors 1450 provided in the vehicle through the interface unit 820.

When data (information) to be transmitted to the server is received, the communication module 810 may transmit the data (information) to the server 1400 through wireless communication.

In addition, when data (information) to be transmitted to the electric components and the sensors 1450 provided in the vehicle is received, the communication module 810 may transmit the data (information) to at least one of the electric components and the sensors 1450 provided in the vehicle through wired communication (e.g., CAN communication).

The data (information) transmitted to the server or the data (information) transmitted to the electric equipments (or sensors) provided in the vehicle may include at least one of object information determined through the image sensor, an optimal path, and autonomous driving visibility information, among pieces of information processed (or generated) in the processor 830.

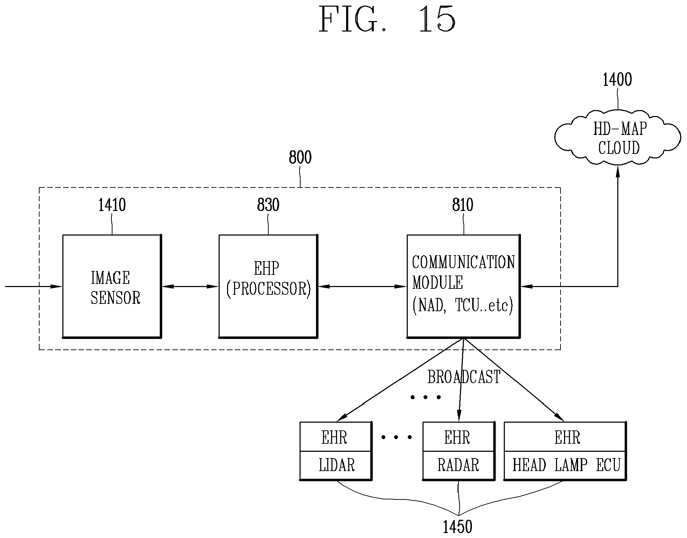

Meanwhile, as illustrated in FIG. 15, the path providing device according to the present disclosure may include the communication module 810 (i.e., the communication unit 810).

The communication unit 810 may receive map information including a plurality of layers from a server.

The communication unit 810, the image sensor 1410, and the processor may be provided on one printed circuit board.

When the communication unit 810 is included in the path providing device 800, unlike the configuration illustrated in FIG. 14, the processor 830 and the communication module (communication unit) 810 may directly perform communication with each other through circuits provided on the printed circuit board.

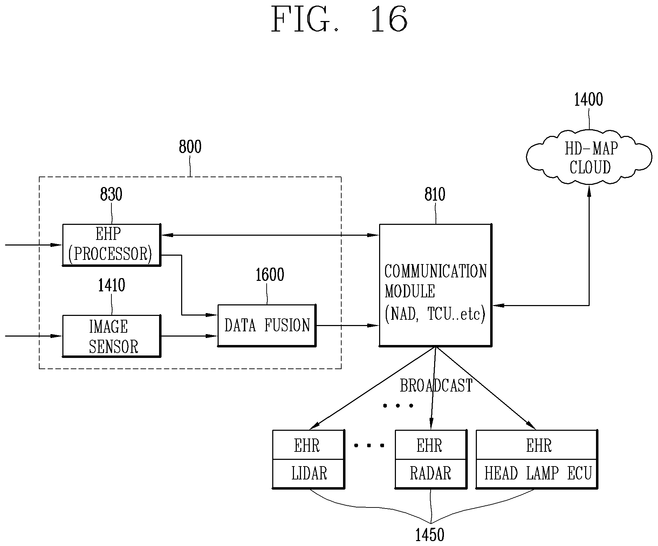

Meanwhile, as illustrated in FIG. 16, the communication module 810 may not be included in the path providing device 800.

In addition, the path providing device 800 according to the present disclosure may further include a data fusion unit 1600 that receives map information, to which an optimal path generated in the processor 830 has been applied, and an image sensed by the image sensor 1410.

The data fusion unit 1600, the processor 830, and the image sensor 1410 may be provided on one printed circuit board, as illustrated in FIG. 16.

The data fusion unit 1600, the processor 830, and the image sensor 1410 may directly perform communication through circuits provided (printed) on the printed circuit board.

The processor 830 may transmit a message including pieces of information excluding information determined by the image sensor 1410 to the communication module 810, and transmit map information including an optimal path to the data fusion unit 1600.

In addition, the data fusion unit 1600 may perform communication with the communication module 810 provided in the vehicle.

FIG. 16 illustrates an embodiment in which the communication module 810 (communication unit) is not included in the path providing device but is provided in the vehicle. Therefore, the data fusion unit 1600 may perform communication with the communication module 810 provided in the vehicle. In this case, the data fusion unit 1600 may perform communication with the communication module 810 through wired communication (or CAN communication).

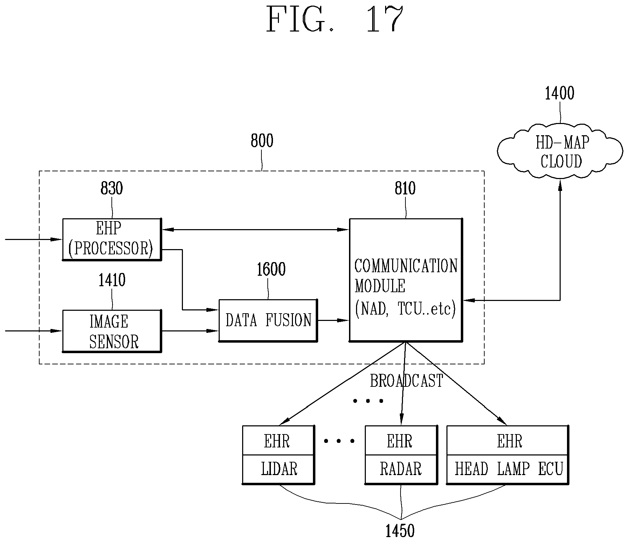

Meanwhile, as illustrated in FIG. 17, the path providing device 800 may include the communication unit 810 (i.e., the communication module). The communication unit 810 may receive map information including a plurality of layers from the server 1400.

The image sensor 1410, the processor 830, the data fusion unit 1600, and the communication unit 810 may be provided on one printed circuit board.

In addition, the image sensor 1410, the processor 830, the data fusion unit 1600, and the communication unit 810 may perform direct communication (or data (information transmission and reception) through circuits provided (printed) on the printed circuit board.

In this specification, when a communication unit is included in the path providing device 800, it is referred to as a communication unit 810, and when a communication unit is not included in the path providing device 800 but provided in the vehicle, it is referred to as a communication module 810.

However, functions performed by the communication unit 810 and the communication module 810 are substantially the same, except for a difference in the aspects of whether communication with the processor 830 is directly performed through circuits on a printed circuit board (i.e., the case where the path providing device 800 includes the communication unit 810) or performed through wired communication (CAN communication) (i.e., the case where the communication module 810 is not included in the path providing device 800 but is provided in the vehicle).

Hereinafter, a more detailed control method of the path providing device including the image sensor will be described in more detail with reference to the accompanying drawings.

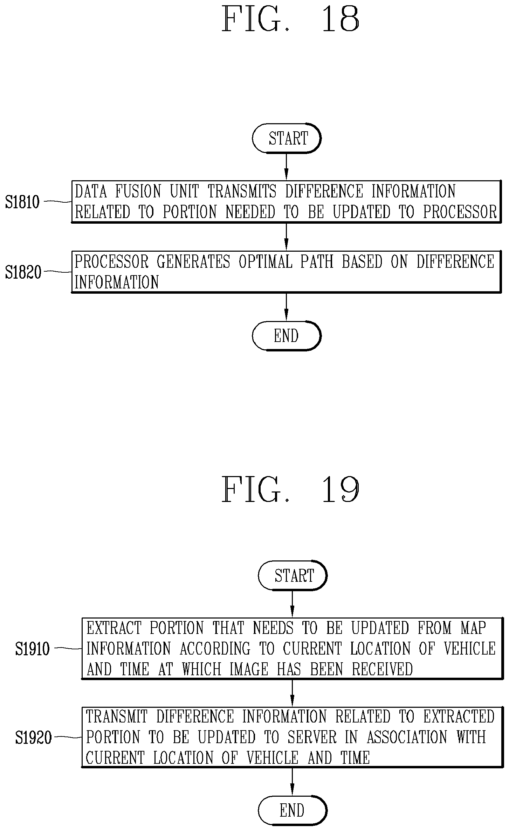

FIGS. 18, 19, and 20 are flowcharts illustrating a method of controlling a path providing device including an image sensor according to the present disclosure.

As illustrated in FIGS. 16 and 17, the path providing device 800 according to the present disclosure may include a data fusion unit 1600.

The data fusion unit 1600 may extract a portion needed to be updated from map information by using an image received from the image sensor 1410.

Specifically, the data fusion unit 1600 may receive an image from the image sensor 1410.

In addition, the data fusion unit 1600 may extract object information by analyzing the received image.

The map information may include object information (or dynamic information).

The data fusion unit 1600 may compare the object information included in the map information with the object information extracted from the image, and extract the portion needed to be updated.

Here, the portion needed to be updated may refer to a portion, in which the object information included in the map information and the object information extracted from the image are different from each other, that is, difference information.

As illustrated in FIG. 18, the data fusion unit 1600 may transmit difference information related to the portion needed to be updated to the processor 830 (S1810).

Subsequently, the processor 830 may generate an optimal path described in FIG. 13 based on the difference information (S1820).

Specifically, the processor 830 may generate or update the optimal path based on the difference information related to the portion needed to be updated, which has been extracted by the data fusion unit 1600.

For example, when an object that has not been reflected in an optimal path is sensed through an image at a place spaced from the vehicle by a predetermined distance, the processor 830 may update the optimal path to avoid the object sensed through the image.

As another example, when an object that is not included in map information is sensed through an image at a place spaced from the vehicle by a predetermined distance, the processor 830 may generate an optimal path in a manner that the vehicle can travel in a lane without the object sensed through the image.

On the other hand, the path providing device 800 according to the present disclosure may determine which portion is actually different in map information on the basis of a location of the vehicle and time, and notify a result of the determination to the server.

Referring to FIG. 19, the data fusion unit 1600 may extract a portion to be updated in map information, based on a current location of the vehicle 100 and a time at which an image has been received (S1910).

Subsequently, the data fusion unit 1600 may transmit difference information related to the extracted portion to be updated to the server in association with the current location of the vehicle and the time.

Accordingly, the path providing device according to the present disclosure can transmit the difference information related to the portion to be updated to the server in association with the current location of the vehicle and the time, thereby updating the map information stored in the server.

Meanwhile, the path providing device 800 may be configured such that the data fusion unit 1600 extracts a portion to be updated in map information based on an image received through the image sensor.

Subsequently, the processor 830 may generate an optimal path for the extracted portion based on the difference information related to the portion to be updated, while generating an optimal path for a portion, which is not necessary to be updated (i.e., a portion without difference), based on map information received through the communication unit 810 (or communication module).

In detail, the data fusion unit 1600 may transmit difference information related to a portion needed to be updated to the processor 830.

The processor 830 may generate an optimal path using the difference information in a path section including the difference information, while generating an optimal path using the map information in a path section not including the difference information.

Here, the path section including the difference information may be determined based on, for example, partial map information (or tile-based map information). A length of the path section or the path section itself may be determined based on map information received in tile units (e.g., partial map information).

Here, the partial map information may refer to that map information is divided into a plurality of partial map information. The plurality of partial map information may mean map information in tile units described above.

Each of the plurality of partial map information may be formed of a plurality of layers, and the plurality of layers may be formed in same size (i.e., to cover same area).

That is, the partial map information may refer to map information having a smaller size than that of the map information, and may refer to map information in tile units covering a predetermined area, as illustrated in FIGS. 12Aand 12B.

That is, the processor 830 may generate an optimal path using the difference information, for a path section included in tile-based map information including the difference information.

In addition, the processor 830 may generate an optimal path based on the map information, for the other path sections not including the difference information.

In addition, when the communication unit 810 is not included in the path providing device 800 (that is, not included in the path providing device 800 but included in the vehicle), the data fusion unit 1600 may receive map data from the server 1400 through the communication module 810 and receive image from the image sensor 1410.

Thereafter, the data fusion unit 1600 may compare the map information with object information included in the image, and extract information that needs to be corrected (i.e., difference information related to a portion that needs to be updated) in the map information.

The data fusion unit 1600 may transmit the extracted information to the server through the communication module.

That is, even if the communication module is present outside the path providing device 800, the data fusion unit 1600 according to the present disclosure can update map information of the server by transmitting information that needs to be corrected, extracted using the image sensor, (i.e., difference information related to a portion that needs to be updated) to the server 1400 through the communication module.

Meanwhile, the processor 830 may determine external environment information using at least one of the sensors described above.

The data fusion unit 1600 may differently set a method of extracting a portion that needs to be updated, based on the determined external environment information.

The external environment information may include ambient brightness of the vehicle 100, light transmittance, type of weather, road condition, type of road surface, and the like.

Specifically, the data fusion unit 1600 may differently set at least one of an extraction range for extracting a portion that needs to be updated and a type of information to be extracted, based on whether the external environment information satisfies a preset condition.

For example, when the weather is foggy or rainy, or when ambient brightness of the vehicle is darker than brightness, a visible distance of an image received through the image sensor 1410 may be short. In this case, the processor 830 may decrease an extraction range (e.g., extraction distance and width) for extracting the portion that needs to be updated. The extraction range may be determined based on the vehicle 100.

In addition, the processor 830 may differently set a type of information for extracting a portion that needs to be updated, according to the external environment information.

For example, the processor 830 may differently set a type of an object to be extracted (e.g., a moving object or a stationary object, an object having a predetermined size or more, an object smaller than a predetermined size, a color of an object) based on whether an external environment information satisfies a preset condition.

Also, the processor 830 may determine image reliability according to external environment information. For example, image reliability may be lower than a predetermined value when it rains (or snows), while image reliability may be equal to or higher than a predetermined value when the weather is good.

The processor 830 may also differently set at least one of an extraction range for extracting a portion that needs to be updated and a type of information to be extracted, based on the image reliability.

The operation/function/control method of the data fusion unit 1600 described above may be performed by the processor 830 when the data fusion unit 1600 does not exist as illustrated in FIGS. 14 and 15.

On the other hand, the path providing device according to the present disclosure may include the image sensor 1410 so as to perform data computation in a distributing manner.

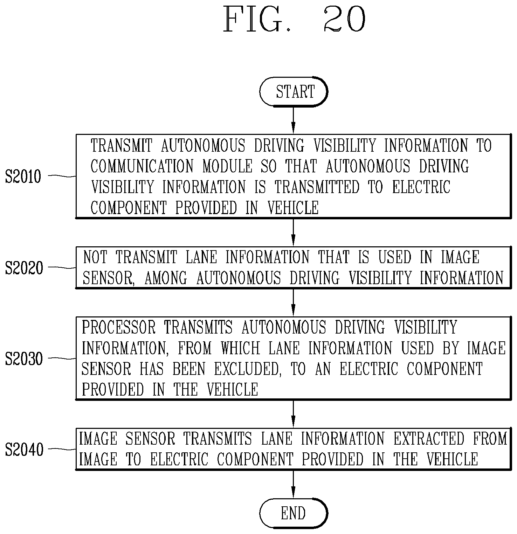

Referring to FIG. 20, the processor 830 may transmit autonomous driving visibility information to the communication module 810 so that the autonomous driving visibility information is transmitted to an electric component provided in the vehicle (S2010).

That is, as described with reference to FIG. 13, the processor 830 may transmit autonomous driving visibility information used for autonomous driving or lane-based path guidance to electric components (including a sensor) provided in the vehicle.

At this time, the processor 830 may transmit partial information of the autonomous driving visibility information for each electric component provided in the vehicle.

Specifically, the processor 830 may not transmit lane information used (or extracted) by the image sensor 1410, of the autonomous driving visibility information (S2020).

The processor 830 may transmit the autonomous driving visibility information, except for the lane information used (or extracted) by the image sensor 1410, to the electric component 1450 provided in the vehicle (S2030).

In addition, the image sensor 1410 may transmit lane information extracted from an image to the electric component provided in the vehicle (S2040).

Specifically, when transmitting autonomous driving visibility information, the processor 830 may transmit only information, which is left after excluding information (e.g., lane information) related to the image sensor) from various information included in the autonomous driving visibility information, to the electric component (including the sensor) 1450 provided in the vehicle.

Here, the lane information may be information used by the image sensor 1410 or may be information extracted by the image sensor 1410.

That is, since lane information among various pieces of information (or data) included in the autonomous driving visibility information is information that is used only by the image sensor 1410 or can be extracted by the image sensor 1410, the lane information can be excluded from the autonomous driving visibility information.

In addition, when the path providing device 800 transmits the autonomous driving visibility information to the electric component provided in the vehicle, the processor 830 may transmit only autonomous driving visibility information excluding the lane information, and the image sensor 1410 may direct transmit the lane information. Accordingly, the present disclosure can provide a noble path providing device capable of reducing data overload.

Hereinafter, effects of a path providing device and a path providing method thereof according to the present disclosure will be described.

First, the present disclosure can provide a path providing device that is optimized for generating or updating autonomous driving visibility information.

Second, the present disclosure can provide a path providing device including an image sensor, which may allow image data to be used more quickly without a communication process between the path providing device and a separate camera, thereby improving processing speed.

Third, the present disclosure can provide a path providing device having an image sensor. Accordingly, a processor of the path providing device does not have to perform a process to be performed by the image sensor. This may result in reducing computational overload.

The present disclosure can be implemented as computer-readable codes (applications or software) in a program-recorded medium. The method of controlling the autonomous vehicle can be realized by a code stored in a memory or the like.

The computer-readable media may include all types of recording devices each storing data readable by a computer system. Examples of such computer-readable medium may include hard disk drive (HDD), solid state disk (SSD), silicon disk drive (SDD), ROM, RAM, CD-ROM, magnetic tape, floppy disk, optical data storage element and the like. Also, the computer-readable media may also be implemented as a format of carrier wave (e.g., transmission via an Internet). The computer may include the processor or the controller. Therefore, it should also be understood that the above-described embodiments are not limited by any of the details of the foregoing description, unless otherwise specified, but rather should be construed broadly within its scope as defined in the appended claims, Therefore, all changes and modifications that fall within the metes and bounds of the claims, or equivalents of such metes and bounds are therefore intended to be embraced by the appended claims.

## Claims

1. A path providing device for providing a path to a vehicle, the device comprising:
an image sensor;
an interface unit configured to receive sensing information from one or more sensors provided in the vehicle; and
a processor configured to:
specify one lane in which the vehicle is located on a road with a plurality of lanes based on an image, received from the image sensor, among the sensing information,
estimate an optimal path, on which the vehicle is expected or planned to move based on the specified one lane, in lane units using map information received through a communication module provided in the vehicle,
generate autonomous driving visibility information in which the sensing information is fused to the optimal path to transmit the information to at least one of a server and an electric component provided in the vehicle, and
update the optimal path based on dynamic information for guiding a movable object located on the optimal path, the dynamic information being fused with the autonomous driving visibility information,
wherein the processor and the image sensor are provided on one printed circuit board, and
wherein the path providing device further includes a data fusion unit configured to extract a portion that needs to be updated from the map information using the image received from the image sensor.

2. The path providing device of claim 1, wherein the data fusion unit is further configured to transmit difference information related to the portion that needs to be updated to the processor, and
wherein the processor is further configured to generate the optimal path based on the difference information.

3. The path providing device of claim 1, wherein the data fusion unit is further configured to:
extract a portion that needs to be updated from the map information according to a current location of the vehicle and a time at which the image has been received, and
transmit difference information related to the extracted portion that needs to be updated to the server in association with the current location of the vehicle and the time.

4. The path providing device of claim 1, wherein the data fusion unit is further configured to transmit difference information related to the portion that needs to be updated to the processor, and
wherein the processor is further configured to:
generate an optimal path using the difference information in a path section including the difference information, and
generate an optimal path using the map information in a path section not including the difference information.

5. The path providing device of claim 1, wherein the data fusion unit is further configured to:
receive map information from the server through the communication module and receive an image from the image sensor,
compare the map information with object information included in the image to extract information that needs to be corrected from the map information, and
transmit the extracted information to the server through the communication module.

6. The path providing device of claim 5, wherein the processor is further configured to determine external environment information using at least one of the sensors, and
wherein the data fusion unit is further configured to differently set a method of extracting a portion that needs to be updated, based on the determined external environment information.

7. The path providing device of claim 6, wherein the data fusion unit is further configured to differently set at least one of an extraction range for extracting the portion that needs to be updated and a type of information to be extracted, based on whether the external environment information satisfies a preset condition.

8. The path providing device of claim 1, wherein the processor is further configured to transmit the autonomous driving visibility information to the communication module so that the autonomous driving visibility information can be transmitted to an electric component provided in the vehicle.

9. The path providing device of claim 8, wherein the processor is further configured to transmit partial information of the autonomous driving visibility information for each electric component provided in the vehicle.

10. The path providing device of claim 9, wherein the processor is further configured not to transmit lane information that is used in the image sensor, among the autonomous driving visibility information.

11. The path providing device of claim 10, wherein the processor is further configured to transmit autonomous driving visibility information, from which lane information used by the image sensor has been excluded, to an electric component provided in the vehicle, and
the image sensor is configured to transmit lane information extracted from the image to the electric component provided in the vehicle.
